# EUROPEAN PATENT APPLICATION

(11) **EP 4 783 580 A1**
(43) Date of publication of application: **29.07.2026**
(21) Application number: 25829372.9
(22) Date of filing: 28.03.2025
(51) Int. Cl.: H04N 19/17

(54) **PICTURE DISPLAY METHOD AND RELATED APPARATUS**

(30) Priority: 20.06.2024 CN 202410808432
(71) Applicant: HUAWEI TECHNOLOGIES CO., LTD., Shenzhen 518129 (CN)
(72) Inventor: HU, Shiyu, Shenzhen, Guangdong 518129 (CN); YANG, Qichao, Shenzhen, Guangdong 518129 (CN); DU, Wei, Shenzhen, Guangdong 518129 (CN)
(74) Representative: Maiwald GmbH
(86) International application number: PCT/CN2025/085685
(87) International publication number: WO 2025/260885

(57) **Abstract**

Embodiments of this application provide a picture display method and a related apparatus. The method may include: First, when storing thumbnails corresponding to a shot or saved picture, an electronic device stores the thumbnails based on an arrangement order of the thumbnails in a thumbnail display interface. In this way, the electronic device has a capability of querying and obtaining the thumbnails in batches. Then, when the electronic device displays the thumbnail display interface, the electronic device may query and obtain the thumbnails in batches. The electronic device may stitch a plurality of obtained thumbnails to obtain a stitched thumbnail, and then the electronic device may display the stitched thumbnail by using a view control. The picture display method provided in this application can improve performance and a frame rate of the electronic device in loading and displaying a large quantity of thumbnails, thereby avoiding or reducing occurrence of problems of blank blocks and frame freezing when a user browses a large quantity of thumbnails.

## Description

This application claims priority to Chinese Patent Application No. 202410808432.9, filed with the China National Intellectual Property Administration on June 20, 2024 and entitled "PICTURE DISPLAY METHOD AND RELATED APPARATUS", which is incorporated herein by reference in its entirety.

### TECHNICAL FIELD

This application relates to the field of electronic devices and electronic technologies, and in particular, to a picture display method and a related apparatus.

### BACKGROUND

An electronic device may display, in a thumbnail display interface, thumbnails corresponding to photos (which may also be referred to as pictures) shot or saved by the electronic device. In some view scenes, the electronic device may simultaneously display a large quantity of thumbnails. For example, the electronic device may simultaneously display a large quantity of thumbnails in a month-view scene and a year-view scene of a gallery.

Currently, for a plurality of thumbnails displayed in the thumbnail display interface of the electronic device, the electronic device creates a plurality of view controls to separately carry and display the plurality of thumbnails. Each thumbnail displayed in the thumbnail display interface exclusively occupies a view control. When the electronic device loads and displays a thumbnail, the electronic device creates a view control, obtains a picture resource by using an input/output (input/output, IO) interface, decodes the picture resource, and renders and displays the view control. When the electronic device needs to load and display a large quantity of thumbnails, the electronic device needs to create a large quantity of view controls, and needs to call the IO interface for a plurality of times to obtain picture resources, perform picture decoding for a plurality of times, and render and display the view controls for a plurality of times. When the electronic device needs to display a large quantity of thumbnails in a short period, operations of the electronic device, such as rendering, displaying, calling the IO interface to obtain picture resources, and decoding pictures, contend with each other for central processing unit (central processing unit, CPU) resources of the electronic device. Consequently, it takes the electronic device a longer time to obtain the picture resources, decode the pictures, and create view controls. When a user scrolls through the thumbnail display interface used to display a large quantity of thumbnails in the gallery or performs an operation such as dragging a scroll bar, the following case may occur: Picture decoding is not completed after creation of view controls, or view controls are not created in time. As a result, frame freezing occurs when the electronic device displays the thumbnails. For example, a large quantity of blank blocks appear in the thumbnail display interface. Therefore, user experience is poor.

Therefore, how to reduce or avoid frame freezing during display of the electronic device when the electronic device displays a large quantity of thumbnails is an urgent problem to be resolved.

### SUMMARY

This application provides a picture display method and a related apparatus. According to the picture display method, when an electronic device displays a large quantity of thumbnails, frame freezing problems of the electronic device can be reduced or avoided.

According to a first aspect, this application provides a picture display method. The method may include: An electronic device receives a first operation of a user on a gallery application, and in response, obtains a first group of thumbnails, where the first group of thumbnails includes at least two thumbnails; the electronic device stitches the first group of thumbnails into a first large picture in display order; and the electronic device renders the first large picture, and displays a thumbnail display interface of the gallery application, where the first large picture is displayed in the thumbnail display interface.

The first operation includes any one of an operation of starting the gallery application by the user, an operation of switching between view scenes by the user on the thumbnail display interface, and a scroll operation of the user on the thumbnail display interface.

According to the picture display method provided in the first aspect, the electronic device may stitch a plurality of obtained thumbnails to obtain a stitched thumbnail, and then the electronic device may display the stitched thumbnail by using a view control. Thumbnails displayed in the thumbnail display interface are stitched into one or more large pictures. One view control can carry one large picture. In this way, the electronic device can display a large quantity of thumbnails by using only a few view controls. In addition, the electronic device may query and obtain thumbnails in batches, so that the number of IO interface calls can be reduced. In this way, performance and a frame rate of the electronic device in loading and displaying a large quantity of thumbnails can be improved, thereby avoiding or reducing occurrence of problems of blank blocks and frame freezing when the user browses a large quantity of thumbnails.

With reference to the first aspect, in a possible implementation, before displaying the thumbnail display interface of the gallery application, the method may include: The electronic device creates a first view control, and carries the first large picture by using the first view control.

In this way, one view control can carry one large picture, and the electronic device can display a large quantity of thumbnails by using only a few view controls. Therefore, display performance of the electronic device can be improved.

With reference to the first aspect, in a possible implementation, the method may further include: The electronic device obtains a second group of thumbnails in response to the first operation, where the second group of thumbnails includes at least two thumbnails; the electronic device stitches the second group of thumbnails into a second large picture in display order; and the electronic device renders the second large picture, and displays the second large picture in the thumbnail display interface.

In this way, the thumbnail display interface displays a large picture obtained through stitching, and a large quantity of thumbnails can be displayed in one thumbnail display interface by using only a few view controls. Therefore, display performance of the electronic device can be improved.

With reference to the first aspect, in a possible implementation, after displaying the second large picture in the thumbnail display interface, the method may further include: The electronic device receives a second operation, and in response, displays a part of content of the first large picture and all content of the second large picture in the thumbnail display interface, where the second operation is an upward scroll operation on the thumbnail display interface.

In this way, the electronic device may determine, based on the second operation, which controls are to be displayed in the thumbnail display interface, and which portion of the large picture is to be displayed in a control: either a part or the entire large picture. The large picture carried in the view control is complete, but only a part of the large picture is displayed in a display area of the thumbnail display interface due to a user operation. Because a part that is not displayed is also loaded and stitched in advance, when the user performs a scroll operation, the electronic device can display the undisplayed part of the large picture in the view control more quickly. In this way, display performance of the electronic device can be improved, and user experience can be improved.

With reference to the first aspect, in a possible implementation, before displaying the second large picture in the thumbnail display interface, the method may further include: The electronic device creates a second view control, and carries the second large picture by using the second view control.

In this way, one view control can carry one large picture, and the electronic device can display a large quantity of thumbnails by using only a few view controls. Therefore, display performance of the electronic device can be improved.

With reference to the first aspect, in a possible implementation, after displaying the thumbnail display interface of the gallery application, the method may further include: The electronic device receives a third operation, and in response, obtains a third group of thumbnails, where the third group of thumbnails includes at least two thumbnails; the electronic device stitches the third group of thumbnails into a third large picture in display order; the electronic device creates a third view control, and carries the third large picture by using the third view control; and the electronic device renders the third large picture, and displays the third large picture in the thumbnail display interface.

In this way, the electronic device can display a large quantity of thumbnails by using only a few view controls.

With reference to the first aspect, in a possible implementation, obtaining the first group of thumbnails may include: The electronic device obtains the first group of thumbnails from a database, where a storage order of the first group of thumbnails in the database is consistent with the display order of the first group of thumbnails.

In this way, because the storage order of the first group of thumbnails in the database is consistent with the display order of the first group of thumbnails, the electronic device may read the first group of thumbnails in batches at a time. Therefore, the number of input/output interface calls of the electronic device can be reduced, performance and a frame rate of the electronic device in loading and displaying a large quantity of thumbnails can be improved, and power consumption of the electronic device can be reduced.

With reference to the first aspect, in a possible implementation, that the electronic device stitches the first group of thumbnails into the large picture in display order may include: The electronic device requests first memory; and the database of the electronic device sequentially fills the first group of thumbnails into the first memory in display order, and stitches the first group of thumbnails in the first memory to obtain the large picture.

The first memory is shared memory.

In this way, another process of the electronic device, for example, a rendering process, may read the large picture across processes, thereby improving rendering performance and reducing power consumption of the electronic device.

With reference to the first aspect, in a possible implementation, that the electronic device renders the first large picture may include: A rendering process of the electronic device reads the first large picture from the first memory, and renders the first large picture. In this way, the rendering process may read the large picture across processes, thereby improving rendering performance and reducing power consumption of the electronic device.

With reference to the first aspect, in a possible implementation, the database stores metadata of the first group of thumbnails, and the metadata includes dates and times and identities IDs corresponding to the first group of thumbnails. In this way, the electronic device may distinguish between different thumbnails by using the dates and times and IDs corresponding to the thumbnails.

With reference to the first aspect, in a possible implementation, the first group of thumbnails includes a first thumbnail, a date and time corresponding to the first thumbnail is a first date and time, an ID corresponding to the first thumbnail is a first ID, the first date and time is a date and time when the electronic device saves the first thumbnail, and the first ID is a number that is generated when the electronic device saves the first thumbnail and that is used to identify the first thumbnail. In this way, the electronic device may distinguish between different thumbnails by using the dates and times and IDs corresponding to the thumbnails.

With reference to the first aspect, in a possible implementation, obtaining the first group of thumbnails may include: The electronic device obtains the metadata of the first group of thumbnails; the electronic device obtains a first query range based on the dates and times and IDs in the metadata of the first group of thumbnails; and the electronic device obtains the first group of thumbnails within the first query range from the database based on the first query range at a time.

In this way, the electronic device may read a plurality of thumbnails at a time, so that the number of input/output interface calls can be reduced. Therefore, performance and a frame rate of the electronic device in loading and displaying a large quantity of thumbnails are improved, and power consumption of the electronic device is reduced.

With reference to the first aspect, in a possible implementation, that the electronic device obtains the query range based on the dates and times and IDs in the metadata of the first group of thumbnails may include: The electronic device assembles the dates and times and IDs of the first group of thumbnails, to obtain a plurality of character strings, where a quantity of the plurality of character strings is equal to a quantity of thumbnails in the first group; and the electronic device determines a maximum value and a minimum value in the plurality of character strings, and sets the first query range based on the maximum value and the minimum value. In this way, the electronic device may determine the query range of the thumbnails by using the maximum value and the minimum value, and obtain all the thumbnails within the query range.

With reference to the first aspect, in a possible implementation, the third operation is a scroll operation, and obtaining the third group of thumbnails may include: The electronic device determines dates and times and IDs of the third group of thumbnails based on the third operation; the electronic device determines a second query range of the third group of thumbnails based on the dates and times and IDs of the third group of thumbnails; and the electronic device obtains the third group of thumbnails within the second query range from the database based on the second query range at a time.

In this way, the electronic device may determine, based on the operation, which thumbnails are to be displayed currently, and set the query range based on the metadata of the thumbnails that need to be displayed. Therefore, the electronic device may obtain the thumbnails within the query range in batches at a time.

With reference to the first aspect, in a possible implementation, that the electronic device obtains the first group of thumbnails may include: The electronic device allocates the first view control to carry the first group of thumbnails; and the electronic device sends a thumbnail loading request to the database by using the first view control, where the thumbnail loading request is used to obtain the first group of thumbnails from the database. In this way, the electronic device may request, by using the view control, to load the thumbnails that need to be carried by the view control.

With reference to the first aspect, in a possible implementation, a quantity of view controls required in the thumbnail display interface is determined based on a total quantity of thumbnails stored on the electronic device and a quantity of thumbnails read in batches. In this way, the electronic device may determine the quantity of view controls required in the thumbnail display interface.

With reference to the first aspect, in a possible implementation, before the electronic device receives the first operation of the user on the gallery application, and in response, obtains the first group of thumbnails, the method may further include: The electronic device obtains a first picture; the electronic device performs downsampling on the first picture, to obtain thumbnails of the first picture; the electronic device saves dates and times and IDs corresponding to the thumbnails of the first picture; and the electronic device saves the thumbnails of the first picture to the database in order of the dates and times and IDs corresponding to the thumbnails of the first picture.

In this way, because the storage order of the thumbnails is consistent with the display order, the electronic device has a capability of obtaining the thumbnails in batches.

With reference to the first aspect, in a possible implementation, that the electronic device saves the thumbnails of the first picture to the database in order of the dates and times and IDs corresponding to the thumbnails of the first picture may include: The electronic device performs texture compression on the thumbnails of the first picture to obtain texture data; and the electronic device saves the texture data to the database in order of the dates and times and IDs corresponding to the thumbnails of the first picture.

In this way, because a GPU can directly display the texture data without decoding, decoding time of the electronic device is reduced, and power consumption of the electronic device is reduced.

According to a second aspect, an electronic device is provided. The electronic device may include a first application, a processing module, a graphics subsystem, and a database, where the database is configured to store thumbnails;
the first application may be configured to receive a first operation of a user on a gallery application, and in response, obtain a first group of thumbnails, where the first group of thumbnails includes at least two thumbnails;
the processing module may be configured to stitch the first group of thumbnails into a first large picture in display order;
the graphics subsystem may be configured to render the first large picture; and
the first application may be configured to display a thumbnail display interface of the gallery application, where the first large picture is displayed in the thumbnail display interface.

The first operation includes any one of an operation of starting the first application by the user, an operation of switching between view scenes by the user on the thumbnail display interface, and a scroll operation of the user on the thumbnail display interface.

The first application may include any one of the gallery application, a file management application, and a picture picker application.

In this way, the electronic device may stitch a plurality of obtained thumbnails to obtain a stitched thumbnail, and then the electronic device may display the stitched thumbnail by using a view control. Thumbnails displayed in the thumbnail display interface are stitched into one or more large pictures. One view control can carry one large picture. In this way, the electronic device can display a large quantity of thumbnails by using only a few view controls. In addition, the electronic device may query and obtain thumbnails in batches, so that the number of IO interface calls can be reduced. In this way, performance and a frame rate of the electronic device in loading and displaying a large quantity of thumbnails can be improved, thereby avoiding or reducing occurrence of problems of blank blocks and frame freezing when the user browses a large quantity of thumbnails.

With reference to the second aspect, in a possible implementation, the first application may further include: creating a first view control, and carrying the first large picture by using the first view control.

In this way, one view control can carry one large picture, and the electronic device can display a large quantity of thumbnails by using only a few view controls. Therefore, display performance of the electronic device can be improved.

With reference to the second aspect, in a possible implementation, the processing module may be further configured to: obtain a second group of thumbnails in response to the first operation, where the second group of thumbnails includes at least two thumbnails; and stitch the second group of thumbnails into a second large picture in display order;
the graphics subsystem may be further configured to render the second large picture; and
the first application may be further configured to display the second large picture in the thumbnail display interface.

In this way, the thumbnail display interface displays a large picture obtained through stitching, and a large quantity of thumbnails can be displayed in one thumbnail display interface by using only a few view controls. Therefore, display performance of the electronic device can be improved.

With reference to the second aspect, in a possible implementation, the first application may be further configured to: receive a second operation, and in response, display a part of content of the first large picture and all content of the second large picture in the thumbnail display interface, where the second operation is an upward scroll operation on the thumbnail display interface.

In this way, the electronic device may determine, based on the second operation, which controls are to be displayed in the thumbnail display interface, and which portion of the large picture is to be displayed in a control: either a part or the entire large picture. The large picture carried in the view control is complete, but only a part of the large picture is displayed in a display area of the thumbnail display interface due to a user operation. Because a part that is not displayed is also loaded and stitched in advance, when the user performs a scroll operation, the electronic device can display the undisplayed part of the large picture in the view control more quickly. In this way, display performance of the electronic device can be improved, and user experience can be improved.

With reference to the second aspect, in a possible implementation, the first application may be further configured to: create, by the electronic device, a second view control, and carry the second large picture by using the second view control.

In this way, one view control can carry one large picture, and the electronic device can display a large quantity of thumbnails by using only a few view controls. Therefore, display performance of the electronic device can be improved.

With reference to the second aspect, in a possible implementation, the first application may be further configured to: receive, by the electronic device, a third operation, and in response, obtain a third group of thumbnails, where the third group of thumbnails includes at least two thumbnails;
the processing module may be further configured to stitch the third group of thumbnails into a third large picture in display order;
the first application may be further configured to create a third view control, and carry the third large picture by using the third view control;
the graphics subsystem may be further configured to render the third large picture; and
the first application may be further configured to display the third large picture in the thumbnail display interface.

In this way, the electronic device can display a large quantity of thumbnails by using only a few view controls.

With reference to the second aspect, in a possible implementation, the first application may be further configured to obtain the first group of thumbnails from a database, where a storage order of the first group of thumbnails in the database is consistent with the display order of the first group of thumbnails.

In this way, because the storage order of the first group of thumbnails in the database is consistent with the display order of the first group of thumbnails, the electronic device may read the first group of thumbnails in batches at a time. Therefore, the number of input/output interface calls of the electronic device can be reduced, performance and a frame rate of the electronic device in loading and displaying a large quantity of thumbnails can be improved, and power consumption of the electronic device can be reduced.

With reference to the second aspect, in a possible implementation, the database may be further configured to request first memory; and
the database may be further configured to sequentially fill the first group of thumbnails into the first memory in display order, and stitch the first group of thumbnails in the first memory to obtain the large picture.

The first memory is shared memory.

In this way, another process of the electronic device, for example, a rendering process, may read the large picture across processes, thereby improving rendering performance and reducing power consumption of the electronic device.

With reference to the second aspect, in a possible implementation, the graphics subsystem may be further configured to read the first large picture from the first memory, and render the first large picture. In this way, the graphics subsystem may read the large picture across processes, thereby improving rendering performance and reducing power consumption of the electronic device.

With reference to the second aspect, in a possible implementation, the database stores metadata of the first group of thumbnails, and the metadata includes dates and times and identities IDs corresponding to the first group of thumbnails. In this way, the electronic device may distinguish between different thumbnails by using the dates and times and IDs corresponding to the thumbnails.

With reference to the second aspect, in a possible implementation, the first group of thumbnails includes a first thumbnail, a date and time corresponding to the first thumbnail is a first date and time, an ID corresponding to the first thumbnail is a first ID, the first date and time is a date and time when the electronic device saves the first thumbnail, and the first ID is a number that is generated when the electronic device saves the first thumbnail and that is used to identify the first thumbnail. In this way, the electronic device may distinguish between different thumbnails by using the dates and times and IDs corresponding to the thumbnails.

With reference to the second aspect, in a possible implementation, the electronic device may further include a media library and a distributed data management module, where the media library may be configured to: obtain the metadata of the first group of thumbnails; and send a thumbnail query instruction to the distributed data management module, where the query instruction carries the metadata of the first group of thumbnails; and
the distributed data management module may be configured to: receive the query instruction, and obtain a first query range based on the dates and times and IDs that are in the metadata of the first group of thumbnails and that are carried in the query instruction; and obtain the first group of thumbnails within the first query range from the database based on the first query range at a time.

In this way, the electronic device may read a plurality of thumbnails at a time, so that the number of input/output interface calls can be reduced. Therefore, performance and a frame rate of the electronic device in loading and displaying a large quantity of thumbnails are improved, and power consumption of the electronic device is reduced.

With reference to the second aspect, in a possible implementation, the distributed data management module may be further configured to: assemble the dates and times and IDs of the first group of thumbnails, to obtain a plurality of character strings, where a quantity of the plurality of character strings is equal to a quantity of thumbnails in the first group; and determine, by the electronic device, a maximum value and a minimum value in the plurality of character strings, and set the first query range based on the maximum value and the minimum value. In this way, the electronic device may determine the query range of the thumbnails by using the maximum value and the minimum value, and obtain all the thumbnails within the query range.

With reference to the second aspect, in a possible implementation, the third operation is a scroll operation, and the media library may be further configured to determine dates and times and IDs of the third group of thumbnails based on the third operation; and
the distributed data management module may be further configured to: determine a second query range of the third group of thumbnails based on the dates and times and IDs of the third group of thumbnails; and obtain the third group of thumbnails within the second query range from the database based on the second query range at a time.

In this way, the electronic device may determine, based on the operation, which thumbnails are to be displayed currently, and set the query range based on the metadata of the thumbnails that need to be displayed. Therefore, the electronic device may obtain the thumbnails within the query range in batches at a time.

With reference to the second aspect, in a possible implementation, the first application may be further configured to: allocate the first view control to carry the first group of thumbnails; and send a thumbnail loading request to the database by using the first view control, where the thumbnail loading request is used to obtain the first group of thumbnails from the database. In this way, the electronic device may request, by using the view control, to load the thumbnails that need to be carried by the view control.

With reference to the second aspect, in a possible implementation, a quantity of view controls required in the thumbnail display interface is determined based on a total quantity of thumbnails stored on the electronic device and a quantity of thumbnails read in batches. In this way, the electronic device may determine the quantity of view controls required in the thumbnail display interface.

With reference to the second aspect, in a possible implementation, the electronic device may further include a second application, where the second application may be configured to obtain a first picture;
the media library may be further configured to perform downsampling on the first picture, to obtain thumbnails of the first picture;
the media library may be further configured to instruct the distributed data management module to save dates and times and IDs corresponding to the thumbnails of the first picture; and
the distributed data management module may be further configured to save the thumbnails of the first picture to the database in order of the dates and times and IDs corresponding to the thumbnails of the first picture.

In this way, because the storage order of the thumbnails is consistent with the display order, the electronic device has a capability of obtaining the thumbnails in batches.

With reference to the second aspect, in a possible implementation, the media library may be further configured to perform, by the electronic device, texture compression on the thumbnails of the first picture to obtain texture data; and
the distributed data management module may be further configured to save the texture data to the database in order of the dates and times and IDs corresponding to the thumbnails of the first picture.

In this way, because a GPU can directly display the texture data without decoding, decoding time of the electronic device is reduced, and power consumption of the electronic device is reduced.

According to a third aspect, this application provides an electronic device. The electronic device may include one or more processors, one or more displays, and a memory. The one or more displays and the memory are coupled to the one or more processors. The memory stores code. When the code is executed by the processor, the electronic device is enabled to perform the method in any one of the first aspect or the possible implementations of the first aspect.

According to a fourth aspect, this application provides a computer-readable storage medium including computer instructions. When the computer instructions are run on a computer, the computer is enabled to perform the method in any one of the first aspect or the possible implementations of the first aspect.

According to a fifth aspect, this application provides a computer program product. When the computer program product is run on a computer, the computer is enabled to perform the method in any one of the first aspect or the possible implementations of the first aspect.

According to a sixth aspect, this application provides a chip or a chip system, applied to an electronic device and including a processing circuit and an interface circuit. The interface circuit is configured to receive code instructions and transmit the code instructions to the processing circuit. The processing circuit is configured to run the code instructions to perform the method in any one of the first aspect or the possible implementations of the first aspect.

It may be understood that the electronic device provided in the third aspect, the computer-readable storage medium provided in the fourth aspect, the computer program product provided in the fifth aspect, and the chip or chip system provided in the sixth aspect are all configured to perform the method provided in this application. Therefore, for beneficial effects that can be achieved, refer to the beneficial effects corresponding to the foregoing method. Details are not described herein again.

### BRIEF DESCRIPTION OF DRAWINGS

FIG. 1 is a diagram of a thumbnail display interface in a day-view scene according to an embodiment of this application;
FIG. 2 is a diagram of a thumbnail display interface in a month-view scene according to an embodiment of this application;
FIG. 3 is a diagram of a thumbnail display interface in a year-view scene according to an embodiment of this application;
FIG. 4 is a diagram illustrating blank blocks that occur in a thumbnail display interface in a year-view scene according to an embodiment of this application;
FIG. 5A is a diagram of a structure of an electronic device according to an embodiment of this application;
FIG. 5B is a block diagram of a software structure of an electronic device according to an embodiment of this application;
FIG. 5C is a block diagram of a software structure of an electronic device according to an embodiment of this application;
FIG. 6 is a schematic flowchart for saving a thumbnail by an electronic device 100 according to an embodiment of this application;
FIG. 7 is a diagram illustrating sequential saving of thumbnails by an electronic device according to an embodiment of this application;
FIG. 8 is a schematic flowchart of a picture display method according to an embodiment of this application;
FIG. 9A is a diagram illustrating view controls included in a thumbnail display interface according to an embodiment of this application;
FIG. 9B is a diagram illustrating view controls displayed in a display area of a thumbnail display interface according to an embodiment of this application;
FIG. 9C is a diagram illustrating view controls displayed in a display area of a thumbnail display interface according to an embodiment of this application;
FIG. 9D is a diagram illustrating view controls displayed in a display area of a thumbnail display interface according to an embodiment of this application;
FIG. 10 is a diagram illustrating thumbnail stitching according to an embodiment of this application; and
FIG. 11 is a schematic flowchart of a picture display method according to an embodiment of this application.

### DESCRIPTION OF EMBODIMENTS

The following clearly and completely describes the technical solutions in embodiments of this application with reference to the accompanying drawings in embodiments of this application. It is clear that the described embodiments are some but not all of embodiments of this application. All other embodiments obtained by persons of ordinary skill in the art based on embodiments of this application without creative efforts shall fall within the protection scope of this application.

Terms used in the following embodiments of this application are merely intended to describe specific embodiments, but are not intended to limit this application. As used in the specification and the appended claims of this application, terms "one", "a", "an", "the", and "this" expressed in singular forms are also intended to include plural forms, unless otherwise specified in the context clearly. The terms "first" and "second" are merely intended for the purpose of description, and shall not be understood as an indication or implication of relative importance or an implicit indication of a quantity of indicated technical features. Therefore, a feature defined by "first" or "second" may explicitly or implicitly include one or more features. The terms "first", "second", and the like are used to distinguish between different objects, and are not used to describe a specific sequence of the objects. For example, a first object and a second object are used to distinguish between different objects, and are not used to describe a specific sequence of the objects.

In the descriptions of embodiments of this application, unless otherwise specified, "a plurality of" means two or more. For example, a plurality of processing units mean two or more processing units, and a plurality of systems mean two or more systems.

In embodiments of this application, the term "example", "for example", or the like is used to represent an example, an illustration, or a description. Any embodiment or design scheme described as an "example" or "for example" in embodiments of this application should not be construed as being more preferred or advantageous than another embodiment or design scheme. Exactly, use of the term "example" or "for example" or the like is intended to present a relative concept in a specific manner.

The term "and/or" in this application describes only an association relationship between associated objects and represents that three relationships may exist. For example, A and/or B may represent the following three cases: Only A exists, both A and B exist, and only B exists.

The term "user interface (user interface, UI)" in the following embodiments of this application is a medium interface for interaction and information exchange between an application or an operating system and a user. The user interface implements conversion between an internal form of information and a form acceptable to the user. The user interface is source code written in a specific computer language, for example, Java or an extensible markup language (extensible markup language, XML). Interface source code is parsed and rendered on an electronic device, and is finally presented as content that can be identified by the user. The user interface is usually represented in a form of a graphical user interface (graphical user interface, GUI), which is a user interface displayed in a graphical manner and related to computer operations. The user interface may be a visual interface element, for example, a text, an icon, a button, a menu, a tab, a text box, a dialog box, a status bar, a navigation bar, or a widget displayed on a display of the electronic device.

To provide a better understanding of the technical solutions provided in this application, before the technical solutions in this application are described, an electronic device 100 that has a gallery or album function and to which this application is applicable is first briefly described with reference to the accompanying drawings. In embodiments of this application, the electronic device 100 may be referred to as a terminal, or may be referred to as user equipment (user equipment, UE). This is not limited in embodiments of this application. The electronic device 100 in this application may include but is not limited to a mobile phone (mobile phone), a tablet computer, a notebook computer, a palmtop computer, a mobile Internet device (mobile internet device, MID), a wearable device, a virtual reality (virtual reality, VR) device, an augmented reality (augmented reality, AR) device, an in-vehicle device, and the like. A specific form and a specific device type of the electronic device 100 are not limited in embodiments of this application.

Currently, thumbnail display interfaces in different view scenes are displayed in a gallery application of the electronic device 100. For example, the electronic device 100 may separately display, in the gallery application, thumbnail display interfaces in a day-view scene, a month-view scene, a year-view scene, and the like. On the electronic device 100, a user may preview thumbnails presented in chronological order. The user may also select to preview thumbnails by year, month, or day. Preview views in the year, month, and day dimensions may be referred to as a year view, a month view, and a day view respectively. Different quantities of thumbnails in varying sizes are displayed in thumbnail display interfaces in different view scenes, and jumping between different views is allowed, so that the user can quickly find a corresponding picture.

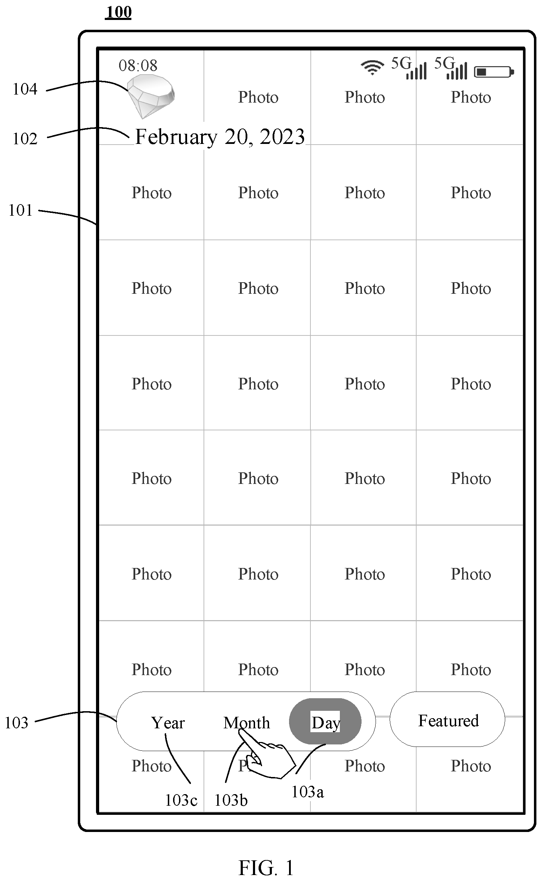

FIG. 1 shows an example of a thumbnail display interface 101 in a day-view scene of the electronic device 100. As shown in FIG. 1, the thumbnail display interface 101 may be used to display thumbnails of photos obtained on a specific date. The thumbnail display interface 101 may further include a text prompt 102. For example, the text prompt 102 may be "February 23, 2023", and indicates that thumbnails corresponding to a plurality of photos displayed in the thumbnail display interface 101 are shot or saved on February 20, 2023. The thumbnails corresponding to the plurality of photos displayed in the thumbnail display interface 101 may include a thumbnail 104 corresponding to a photo 1.

Optionally, the electronic device 100 may arrange, in the thumbnail display interface 101 based on a distribution relationship of eight rows and four columns, the thumbnails corresponding to the plurality of photos that are shot or saved on February 20, 2023.

Optionally, the user may further scroll upward or downward on the thumbnail display interface 101 to view thumbnails corresponding to photos (or referred to as pictures) shot or saved on another date.

As shown in FIG. 1, the thumbnail display interface 101 may further include a view switching control 103. The view switching control 103 is used to switch between different view scenes. For example, the view switching control 103 may include a day-view control 103a, a month-view control 103b, and a year-view control 103c. Currently, the day-view control 103a is in a selected state, and indicates that the electronic device 100 currently displays a thumbnail display interface in the day-view scene. The month-view control 103b is used to instruct the electronic device 100 to switch to displaying a thumbnail display interface in the month-view scene. The year-view control 103c is used to instruct the electronic device 100 to switch to displaying a thumbnail display interface in the year-view scene.

In some feasible examples, the user may tap the month-view control 103b. In response to the user operation, the electronic device 100 may display a thumbnail display interface in the month-view scene.

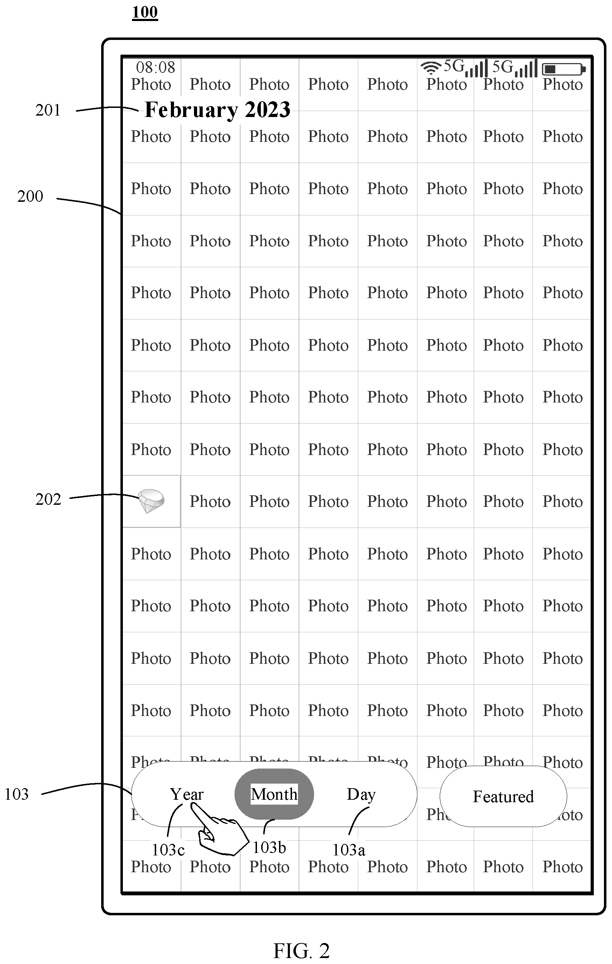

FIG. 2 shows an example of a thumbnail display interface 200 in the month-view scene of the electronic device 100. As shown in FIG. 2, the thumbnail display interface 200 may be used to display thumbnails of photos obtained in a specific month. The thumbnail display interface 200 may further include a text prompt 201. For example, the text prompt 201 may be "February 2023", and indicates that thumbnails corresponding to a plurality of photos displayed in the thumbnail display interface 200 are shot or saved in "February 2023". The thumbnails corresponding to the plurality of photos displayed in the thumbnail display interface 200 may include a thumbnail 202 corresponding to the photo 1.

Optionally, the electronic device 100 may arrange, in the thumbnail display interface 200 based on a distribution relationship of 16 rows and 8 columns, the thumbnails corresponding to the plurality of photos that are shot or saved in February 2023.

Optionally, the user may further scroll upward or downward on the thumbnail display interface 200 to view thumbnails corresponding to photos shot or saved in another month.

As shown in FIG. 2, the thumbnail display interface 200 may further include a view switching control 103. Currently, a month-view control 103b in the view switching control 103 is in a selected state, and indicates that the electronic device 100 currently displays a thumbnail display interface in the month-view scene. For details about the view switching control 103, refer to the foregoing description of FIG. 1. Details are not described herein again.

In some feasible examples, the user may tap the year-view control 103c. In response to the user operation, the electronic device 100 may display a thumbnail display interface in the year-view scene.

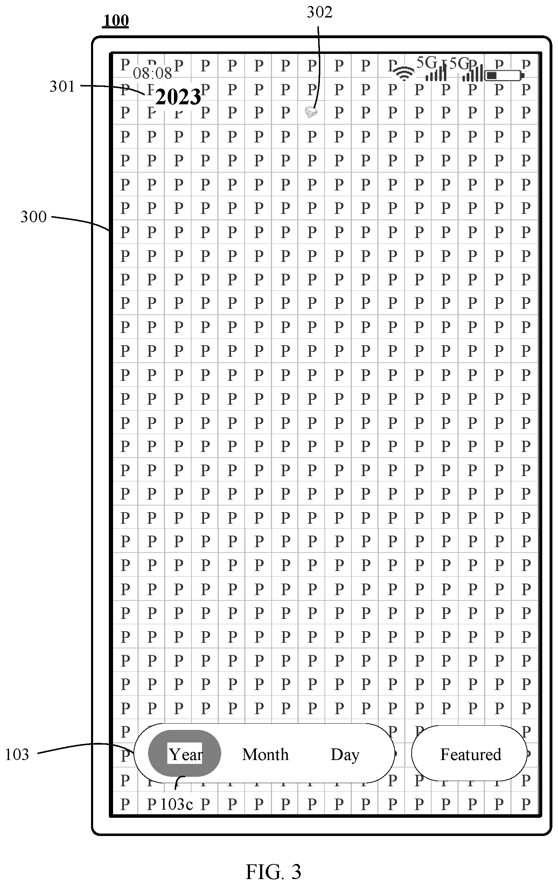

FIG. 3 shows an example of a thumbnail display interface 300 in the year-view scene of the electronic device 100. As shown in FIG. 3, the thumbnail display interface 300 may be used to display thumbnails of photos obtained in a specific year. The thumbnail display interface 300 may further include a text prompt 301. For example, the text prompt 301 may be "2023", and indicates that thumbnails corresponding to a plurality of photos displayed in the thumbnail display interface 300 are shot or saved in year 2023. The thumbnails corresponding to the plurality of photos displayed in the thumbnail display interface 300 may include a thumbnail 302 corresponding to the photo 1.

Optionally, the electronic device 100 may arrange, in the thumbnail display interface 300 based on a distribution relationship of 32 rows and 16 columns, the thumbnails corresponding to the plurality of photos that are shot or saved in year 2023.

Optionally, the user may further scroll upward or downward on the thumbnail display interface 300 to view thumbnails corresponding to photos shot or saved in another year.

As shown in FIG. 3, the thumbnail display interface 300 may further include a view switching control 103. Currently, a year-view control 103c in the view switching control 103 is in a selected state, and indicates that the electronic device 100 currently displays a thumbnail display interface in the year-view scene. For details about the view switching control 103, refer to the foregoing description of FIG. 1. Details are not described herein again.

In some feasible examples, from the day-view scene to the year-view scene, a quantity of thumbnails displayed in the thumbnail display interface gradually increases, but a size of a display of the electronic device 100 remains unchanged. Therefore, from the day-view scene to the year-view scene, sizes of the thumbnails displayed in the thumbnail display interface gradually decrease. For example, for a same photo, a size of a thumbnail of the photo displayed in the thumbnail display interface in the month-view scene is less than a size of a thumbnail of the photo displayed in the thumbnail display interface in the day-view scene. A size of a thumbnail of the photo displayed in the thumbnail display interface in the year-view scene is less than the size of the thumbnail of the photo displayed in the thumbnail display interface in the month-view scene. For example, a size of the thumbnail 302 corresponding to the photo 1 in the year-view scene is less than a size of the thumbnail 202 corresponding to the photo 1 in the month-view scene. The size of the thumbnail 202 corresponding to the photo 1 in the month-view scene is less than a size of the thumbnail 104 corresponding to the photo 1 in the day-view scene.

In embodiments of this application, a quantity of thumbnails displayed by the electronic device 100 in the day-view scene, the month-view scene, and the year-view scene is not limited. It may be understood that, in the quantity of thumbnails displayed by the electronic device 100 in the day-view scene, the month-view scene, and the year-view scene, a quantity of thumbnails that can be displayed in the thumbnail display interface is related to the size of the display of the electronic device 100. A greater size of the display of the electronic device 100 means a larger quantity of thumbnails that can be displayed in the thumbnail display interface, in the quantity of thumbnails displayed by the electronic device 100 in the day-view scene, the month-view scene, and the year-view scene.

The year-view scene is used as an example. When a finger of the user touches and scrolls upward or downward on the thumbnail display interface (for example, the thumbnail display interface 300 shown in FIG. 3) in the year-view scene, after a view control that is in the thumbnail display interface and that is used to display a picture receives a touch event, a corresponding display area requests to refresh thumbnails arranged one by one in reverse chronological order. The refresh request process includes reading thumbnail resources, decoding the picture, drawing, and rendering, so that the thumbnails are finally displayed one by one in the corresponding display area.

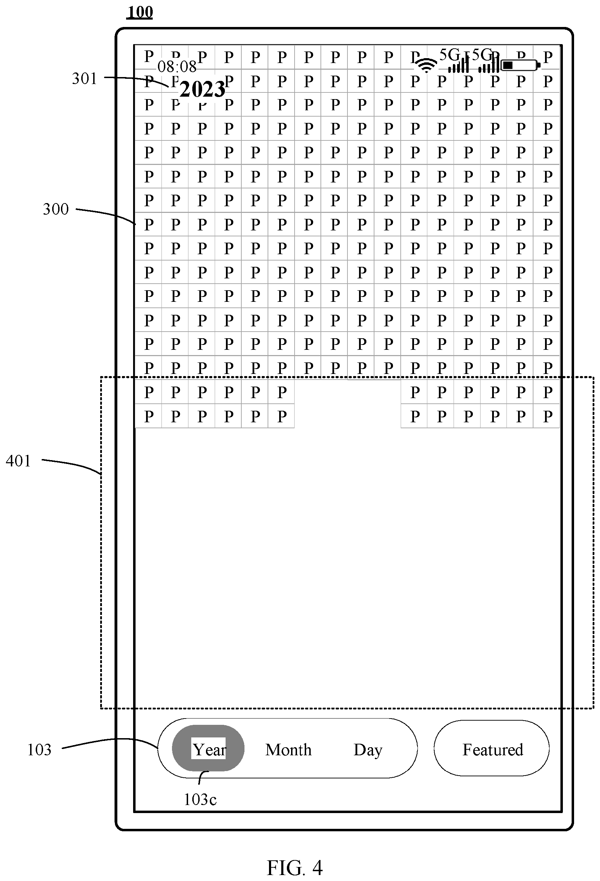

Currently, a quantity of thumbnails that can be displayed by the electronic device 100 in the month-view scene and the year-view scene is far greater than a quantity of thumbnails that can be displayed in the day-view scene. When the electronic device 100 needs to load and display a large quantity of thumbnails, the electronic device 100 needs to create a large quantity of view controls, and needs to call an IO interface for a plurality of times to obtain picture resources, perform picture decoding for a plurality of times, and render and display the view controls for a plurality of times. When the electronic device 100 needs to display a large quantity of thumbnails in a short period, operations of the electronic device 100, such as rendering, displaying, calling the IO interface to obtain picture resources, and decoding pictures, contend with each other for CPU resources of the electronic device 100. Consequently, it takes the electronic device 100 a longer time to obtain the picture resources, decode the pictures, and create view controls. When the user scrolls through the thumbnail display interface used to display a large quantity of thumbnails in the gallery or performs an operation such as dragging a scroll bar, the following case may occur: Picture decoding is not completed after creation of view controls, or view controls are not created in time. As a result, frame freezing occurs when the electronic device displays the thumbnails. For example, a large quantity of blank blocks appear in the thumbnail display interface. For a scene in which a large quantity of thumbnails are displayed in the month-view scene and the year-view scene, for example, the year-view scene, when the user scrolls through the thumbnail display interface 300 in the year-view scene or performs an operation such as dragging a scroll bar, a large quantity of blank blocks appear in the thumbnail display interface. As shown in FIG. 4, blank blocks appear in an area 401 in the thumbnail display interface 300. Therefore, user experience is poor.

To resolve a problem that blank blocks or frame freezing occurs when a user browses thumbnails in a scene in which an electronic device 100 displays a large quantity of thumbnails, an embodiment of this application provides a picture display method. The method may include: First, when storing thumbnails corresponding to shot or saved pictures, the electronic device 100 stores the thumbnails based on an arrangement order of the thumbnails in a thumbnail display interface. In this way, the electronic device 100 has a capability of querying and obtaining the thumbnails in batches. Then, when the electronic device displays the thumbnail display interface, the electronic device 100 may query and obtain the thumbnails in batches. The electronic device 100 may stitch a plurality of obtained thumbnails to obtain a stitched thumbnail, and then the electronic device 100 may display the stitched thumbnail by using a view control.

According to the picture display method provided in this application, thumbnails displayed in the thumbnail display interface are stitched into one or more large pictures. One view control can carry one large picture. In this way, the electronic device 100 can display a large quantity of thumbnails by using only a few view controls (for example, one or two view controls). In addition, the electronic device 100 may query and obtain thumbnails in batches, so that the number of IO interface calls can be reduced. In this way, performance and a frame rate of the electronic device in loading and displaying a large quantity of thumbnails can be improved, thereby avoiding or reducing occurrence of problems of blank blocks and frame freezing when the user browses a large quantity of thumbnails.

It should be noted that the thumbnails in this application may be thumbnails corresponding to pictures, or may be thumbnails corresponding to video files, audio files, or the like. The following uses pictures as an example to describe a process of storing and displaying thumbnails corresponding to pictures. It may be understood that for thumbnails of video files, audio files, and the like, refer to the process of storing and displaying thumbnails corresponding to pictures. Details are not described in embodiments of this application.

The following first describes an example electronic device 100 provided in an embodiment of this application.

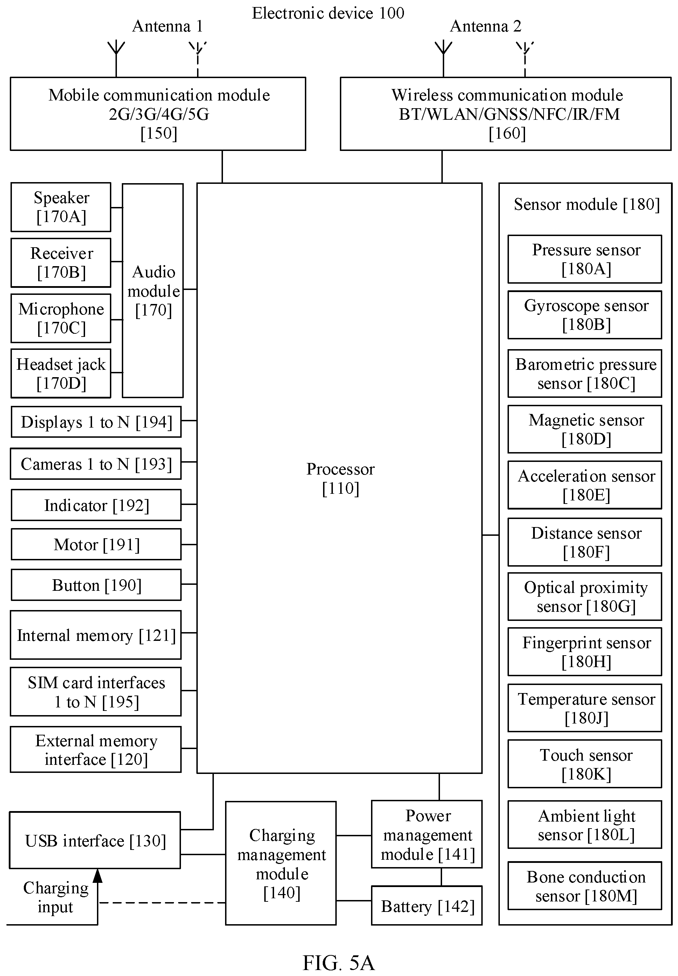

FIG. 5A is a diagram of a structure of an electronic device 100 according to an embodiment of this application.

The electronic device 100 is used as an example below to describe embodiments in detail. It should be understood that the electronic device 100 may have more or fewer components than those shown in the figure, may combine two or more components, or may have different component configurations. Various components shown in the figure may be implemented by hardware including one or more signal processing and/or application-specific integrated circuits, software, or a combination of hardware and software.

The electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identity module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in embodiments of this application does not constitute a specific limitation on the electronic device 100. In some other embodiments of this application, the electronic device 100 may include more or fewer components than those shown in the figure, or some components may be combined, or some components may be split, or different component arrangements may be used. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU). Different processing units may be independent components, or may be integrated into one or more processors.

The controller may be a nerve center and a command center of the electronic device 100. The controller may generate an operation control signal based on instruction operation code and a time sequence signal, to complete control over instruction fetching and instruction execution.

A memory may be further disposed in the processor 110, and is configured to store instructions and data. In some embodiments, the memory in the processor 110 is a cache memory. The memory may store instructions or data just used or cyclically used by the processor 110. If the processor 110 needs to use the instructions or the data again, the processor 110 may invoke the instructions or the data directly from the memory. This avoids repeated access, reduces waiting time of the processor 110, and improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a bidirectional synchronous serial bus, including a serial data line (serial data line, SDA) and a serial clock line (serial clock line, SCL). In some embodiments, the processor 110 may include a plurality of groups of I2C buses. The processor 110 may be separately coupled to the touch sensor 180K, a charger, a flash, the camera 193, and the like through different I2C bus interfaces. For example, the processor 110 may be coupled to the touch sensor 180K through the I2C interface, so that the processor 110 communicates with the touch sensor 180K through the I2C bus interface to implement a touch function of the electronic device 100.

The I2S interface may be configured to perform audio communication. In some embodiments, the processor 110 may include a plurality of groups of I2S buses. The processor 110 may be coupled to the audio module 170 through the I2S bus, to implement communication between the processor 110 and the audio module 170. In some embodiments, the audio module 170 may transmit an audio signal to the wireless communication module 160 through the 12S interface, to implement a function of answering a call by using a Bluetooth headset.

The PCM interface may also be configured to perform audio communication, and sample, quantize, and encode an analog signal. In some embodiments, the audio module 170 may be coupled to the wireless communication module 160 through a PCM bus interface. In some embodiments, the audio module 170 may also transmit an audio signal to the wireless communication module 160 through the PCM interface, to implement a function of answering a call by using a Bluetooth headset. Both the I2S interface and the PCM interface may be configured to perform audio communication.

The UART interface is a universal serial data bus, and is configured to perform asynchronous communication. The bus may be a two-way communication bus. The UART interface converts to-be-transmitted data between serial communication and parallel communication. In some embodiments, the UART interface is usually configured to connect the processor 110 to the wireless communication module 160. For example, the processor 110 communicates with a Bluetooth module in the wireless communication module 160 through the UART interface, to implement a Bluetooth function. In some embodiments, the audio module 170 may transmit an audio signal to the wireless communication module 160 through the UART interface, to implement a function of playing music by using a Bluetooth headset.

The MIPI interface may be configured to connect the processor 110 to a peripheral component such as the display 194 or the camera 193. The MIPI interface includes a camera serial interface (camera serial interface, CSI), a display serial interface (display serial interface, DSI), and the like. In some embodiments, the processor 110 communicates with the camera 193 through the CSI interface, to implement a photographing function of the electronic device 100. The processor 110 communicates with the display 194 through the DSI interface, to implement a display function of the electronic device 100.

The GPIO interface may be configured by software. The GPIO interface may be configured as a control signal or a data signal. In some embodiments, the GPIO interface may be configured to connect the processor 110 to the camera 193, the display 194, the wireless communication module 160, the audio module 170, the sensor module 180, and the like. The GPIO interface may alternatively be configured as an I2C interface, an I2S interface, a UART interface, an MIPI interface, or the like.

The SIM interface may be configured to communicate with the SIM card interface 195, to implement a function of transmitting data to a SIM card or reading data in a SIM card.

The USB interface 130 is an interface complying with a USB standard specification, and may be specifically a mini USB interface, a micro USB interface, a USB type-C interface, or the like. The USB interface 130 may be configured to connect to the charger to charge the electronic device 100, or may be configured to transmit data between the electronic device 100 and a peripheral device, or may be configured to connect to a headset for playing audio through the headset. Alternatively, the interface may be configured to connect to another electronic device, for example, an AR device.

It may be understood that an interface connection relationship, between modules illustrated in this embodiment of this application is merely an illustrative description, and does not constitute a limitation on the structure of the electronic device 100. In some other embodiments of this application, the electronic device 100 may alternatively use an interface connection mode different from that in the foregoing embodiment, or use a combination of a plurality of interface connection modes.

The charging management module 140 is configured to receive a charging input from the charger. The charger may be a wireless charger or a wired charger.

The power management module 141 is configured to connect to the battery 142, the charging management module 140, and the processor 110. The power management module 141 receives an input from the battery 142 and/or the charging management module 140, and supplies power to the processor 110, the internal memory 121, an external memory, the display 194, the camera 193, the wireless communication module 160, and the like.

A wireless communication function of the electronic device 100 may be implemented by using the antenna 1, the antenna 2, the mobile communication module 150, the wireless communication module 160, the modem processor, the baseband processor, and the like.

The antenna 1 and the antenna 2 are configured to transmit and receive electromagnetic wave signals. Each antenna in the electronic device 100 may be configured to cover one or more communication frequency bands. Different antennas may be further reused to improve antenna utilization. For example, the antenna 1 may be reused as a diversity antenna in a wireless local area network. In some other embodiments, the antenna may be used in combination with a tuning switch.

The mobile communication module 150 may provide a wireless communication solution including 2G/3G/4G/5G or the like and applied to the electronic device 100. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the processed electromagnetic wave to the modem processor for demodulation. The mobile communication module 150 may further amplify a signal modulated by the modem processor, and convert the amplified signal into an electromagnetic wave for radiation through the antenna 1. In some embodiments, at least some functional modules in the mobile communication module 150 may be disposed in the processor 110. In some embodiments, at least some functional modules in the mobile communication module 150 and at least some modules in the processor 110 may be disposed in a same component.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then the demodulator transmits the low-frequency baseband signal obtained through demodulation to the baseband processor for processing. The low-frequency baseband signal is processed by the baseband processor and then transmitted to the application processor. The application processor outputs a sound signal by using an audio device (not limited to the speaker 170A, the receiver 170B, or the like), or displays an image or a video by using the display 194. In some embodiments, the modem processor may be an independent component. In some other embodiments, the modem processor may be independent of the processor 110, and is disposed in a same component as the mobile communication module 150 or another functional module.

The wireless communication module 160 may provide a wireless communication solution including a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, and the like, and applied to the electronic device 100. The wireless communication module 160 may be one or more components integrating at least one communication processing module. The wireless communication module 160 receives an electromagnetic wave through the antenna 2, performs frequency modulation and filtering processing on an electromagnetic wave signal, and sends the processed signal to the processor 110. The wireless communication module 160 may further receive a to-be-sent signal from the processor 110, perform frequency modulation and amplification on the signal, and convert the signal into an electromagnetic wave for radiation through the antenna 2.

In some embodiments, the antenna 1 of the electronic device 100 is coupled to the mobile communication module 150, and the antenna 2 is coupled to the wireless communication module 160, so that the electronic device 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, the GNSS, the WLAN, NFC, FM, the IR technology, and/or the like. The GNSS may include a global satellite positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS), or the like.

The electronic device 100 implements a display function by using the GPU, the display 194, the application processor, and the like. The GPU is a microprocessor for image processing, and is connected to the display 194 and the application processor. The GPU is configured to perform mathematical and geometric computation for graphics rendering. The processor 110 may include one or more GPUs, and the one or more GPUs execute program instructions to generate or change display information.

The display 194 is configured to display an image, a video, and the like. The display 194 includes a display panel. The display panel may use a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, a quantum dot light-emitting diode (quantum dot light-emitting diode, QLED), and the like. In some embodiments, the electronic device 100 may include one or N displays 194, where N is a positive integer greater than 1.

The electronic device 100 may implement a photographing function by using the ISP, the camera 193, the video codec, the GPU, the display 194, the application processor, and the like.

The ISP is configured to process data fed back by the camera 193. For example, during photographing, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise, brightness, and color of the image. The ISP may further optimize parameters such as exposure and a color temperature of a shooting scene. In some embodiments, the ISP may be disposed in the camera 193.

The camera 193 is configured to capture a still image or a video. An optical image of an object is generated through the lens and projected to the photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format such as RGB or YUV. In some embodiments, the electronic device 100 may include one or N cameras 193, where N is a positive integer greater than 1.

The digital signal processor is configured to process a digital signal, and may process another digital signal in addition to the digital image signal. For example, when the electronic device 100 selects a frequency, the digital signal processor is configured to perform Fourier transformation on frequency energy.

The video codec is configured to compress or decompress a digital video. The electronic device 100 may support one or more video codecs. In this way, the electronic device 100 may play or record videos in a plurality of encoding formats, for example, moving picture experts group (moving picture experts group, MPEG)-1, MPEG-2, MPEG-3, and MPEG-4.

The NPU is a neural-network (neural-network, NN) computing processor. With reference to a structure of a biological neural network, for example, a transmission mode between neurons in a human brain, the NPU quickly processes input information and can further continuously perform self-learning. Intelligent cognitive applications, such as image recognition, facial recognition, speech recognition, and text understanding, can be implemented on the electronic device 100 by using the NPU.

The external memory interface 120 may be configured to connect to an external storage card, for example, a micro SD card, to extend a storage capacity of the electronic device 100. The external memory card communicates with the processor 110 through the external memory interface 120, to implement a data storage function. For example, files such as music and videos are stored in the external memory card.

The internal memory 121 may be configured to store computer-executable program code, and the executable program code includes instructions. The processor 110 performs various function applications and data processing of the electronic device 100 by running the instructions stored in the internal memory 121. The internal memory 121 may include a program storage area and a data storage area. The program storage area may store an operating system and an application required by at least one function (for example, a facial recognition function, a fingerprint recognition function, and a mobile payment function). The data storage area may store data (such as facial information template data and a fingerprint information template) created during use of the electronic device 100. In addition, the internal memory 121 may include a high-speed random access memory, and may further include a nonvolatile memory, for example, at least one magnetic disk storage device, a flash memory, or a universal flash storage (universal flash storage, UFS).

The electronic device 100 may implement an audio function, for example, music playing and recording, by using the audio module 170, the speaker 170A, the receiver 170B, the microphone 170C, the headset jack 170D, the application processor, and the like.

The audio module 170 is configured to convert digital audio information into an analog audio signal and output the analog audio signal, and is also configured to convert an analog audio input into a digital audio signal. The audio module 170 may be further configured to encode and decode audio signals. In some embodiments, the audio module 170 may be disposed in the processor 110, or some functional modules in the audio module 170 are disposed in the processor 110.

The speaker 170A, also referred to as a "loudspeaker", is configured to convert an electrical audio signal into a sound signal. The electronic device 100 may be used to listen to music or answer a call in hands-free mode over the speaker 170A.

The receiver 170B, also referred to as an "earpiece", is configured to convert an electrical audio signal into a sound signal. When a call is answered or a voice message is received by using the electronic device 100, the receiver 170B may be placed close to a human ear to listen to a voice.

The microphone 170C, also referred to as a "mike" or a "mic", is configured to convert a sound signal into an electrical signal. When making a call or sending a voice message, the user may emit sound near the microphone 170C through the mouth of the user, to input a sound signal to the microphone 170C. At least one microphone 170C may be disposed in the electronic device 100. In some other embodiments, two microphones 170C may be disposed in the electronic device 100, to capture sound signals and further implement a noise reduction function. In some other embodiments, three, four, or more microphones 170C may alternatively be disposed in the electronic device 100, to capture sound signals, implement noise reduction, and identify a sound source, so as to implement a directional recording function and the like.

The headset jack 170D is configured to connect to a wired headset. The headset jack 170D may be the USB interface 130, or may be a 3.5 mm open mobile electronic device platform (open mobile terminal platform, OMTP) standard interface or a cellular telecommunications industry association of the USA (cellular telecommunications industry association of the USA, CTIA) standard interface.

The pressure sensor 180A is configured to sense a pressure signal and can convert the pressure signal into an electrical signal. In some embodiments, the pressure sensor 180A may be disposed on the display 194. There are many types of pressure sensors 180A, for example, a resistive pressure sensor, an inductive pressure sensor, and a capacitive pressure sensor. The capacitive pressure sensor may include at least two parallel plates made of conductive materials. When a force is applied to the pressure sensor 180A, capacitance between electrodes changes. The electronic device 100 determines pressure intensity based on the change in the capacitance. When a touch operation is performed on the display 194, the electronic device 100 detects intensity of the touch operation by using the pressure sensor 180A. The electronic device 100 may also calculate a touch position based on a detection signal of the pressure sensor 180A. In some embodiments, touch operations that are performed in a same touch position but have different touch operation intensity may correspond to different operation instructions. For example, when a touch operation whose touch operation intensity is less than a first pressure threshold is performed on an SMS message application icon, an instruction for viewing an SMS message is executed. When a touch operation whose touch operation intensity is greater than or equal to the first pressure threshold is performed on the SMS message application icon, an instruction for creating an SMS message is executed.

The gyroscope sensor 180B may be configured to determine a motion posture of the electronic device 100. In some embodiments, angular velocities of the electronic device 100 around three axes (that is, an x-axis, a y-axis, and a z-axis) may be determined by using the gyroscope sensor 180B. The gyroscope sensor 180B may be configured to implement image stabilization during photographing. For example, when the shutter is pressed, the gyroscope sensor 180B detects an angle at which the electronic device 100 shakes, calculates, based on the angle, a distance for which a lens module needs to compensate, and drives the lens to move in an opposite direction to counteract the shake of the electronic device 100, thereby implementing image stabilization. The gyroscope sensor 180B may also be used in a navigation scenario and a motion-sensing game scenario.

The barometric pressure sensor 180C is configured to measure barometric pressure. In some embodiments, the electronic device 100 calculates an altitude through the barometric pressure measured by the barometric pressure sensor 180C, to assist in positioning and navigation.

The magnetic sensor 180D includes a Hall sensor. The electronic device 100 may detect opening and closing of a flip cover by using the magnetic sensor 180D. In some embodiments, when the electronic device 100 is a clamshell phone, the electronic device 100 may detect opening and closing of a flip cover based on the magnetic sensor 180D. Further, a feature such as automatic unlocking of the flip cover is set based on a detected opening or closing state of the leather case or a detected opening or closing state of the flip cover.

The acceleration sensor 180E may detect magnitudes of accelerations of the electronic device 100 in various directions (generally along three axes). When the electronic device 100 is stationary, a magnitude and a direction of gravity may be detected. The acceleration sensor 180E may be further configured to identify a posture of the electronic device, and is used in an application such as switching between a landscape mode and a portrait mode or a pedometer.

The distance sensor 180F is configured to measure a distance. The electronic device 100 may measure a distance by using infrared or laser. In some embodiments, in a shooting scene, the electronic device 100 may measure a distance by using the distance sensor 180F, to implement fast focusing.

The optical proximity sensor 180G may include, for example, a light-emitting diode (LED) and an optical detector, for example, a photodiode. The light-emitting diode may be an infrared light-emitting diode. The electronic device 100 emits infrared light by using the light-emitting diode. The electronic device 100 detects infrared reflected light from a nearby object by using the photodiode. When sufficient reflected light is detected, it may be determined that there is an object near the electronic device 100. When insufficient reflected light is detected, the electronic device 100 may determine that there is no object near the electronic device 100. The electronic device 100 may detect, by using the optical proximity sensor 180G, that the user holds the electronic device 100 close to an ear for a call, to automatically turn off a screen and save power. The optical proximity sensor 180G may also be used in smart cover mode in pocket mode for automatic screen unlocking and locking.

The ambient light sensor 180L is configured to sense ambient light brightness. The electronic device 100 may adaptively adjust brightness of the display 194 based on the sensed ambient light intensity. The ambient light sensor 180L may also be configured to automatically adjust white balance during photographing. The ambient light sensor 180L may further cooperate with the optical proximity sensor 180G to detect whether the electronic device 100 is in a pocket, to avoid an accidental touch.

The fingerprint sensor 180H is configured to capture a fingerprint. The electronic device 100 may use a feature of the captured fingerprint to implement fingerprint-based unlocking, application lock access, fingerprint-based photographing, fingerprint-based call answering, and the like.

The temperature sensor 180J is configured to detect a temperature. In some embodiments, the electronic device 100 executes a temperature processing policy by using a temperature detected by the temperature sensor 180J. For example, when the temperature reported by the temperature sensor 180J exceeds a threshold, the electronic device 100 lowers performance of a processor near the temperature sensor 180J, to reduce power consumption and implement thermal protection. In some other embodiments, when the temperature is less than another threshold, the electronic device 100 heats the battery 142 to avoid abnormal shutdown of the electronic device 100 caused by a low temperature. In some other embodiments, when the temperature is less than still another threshold, the electronic device 100 boosts an output voltage of the battery 142 to avoid abnormal shutdown caused by a low temperature.

The touch sensor 180K is also referred to as a "touch panel". The touch sensor 180K may be disposed on the display 194. The touch sensor 180K and the display 194 constitute a touchscreen, which is also referred to as a "touch screen". The touch sensor 180K is configured to detect a touch operation performed on or near the touch sensor 180K. The touch sensor may transfer the detected touch operation to the application processor to determine a type of a touch event. A visual output related to the touch operation may be provided through the display 194. In some other embodiments, the touch sensor 180K may alternatively be disposed on a surface of the electronic device 100, at a location different from that of the display 194.

The button 190 includes a power button, a volume button, and the like. The button 190 may be a mechanical button, or may be a touch button. The electronic device 100 may receive a key input, and generate a key signal input related to a user setting and function control of the electronic device 100.

The motor 191 may generate a vibration prompt. The motor 191 may be configured to provide an incoming call vibration prompt and a touch vibration feedback. For example, touch operations performed on different applications (for example, photographing and audio playing) may correspond to different vibration feedback effects. The motor 191 may also have different vibration feedback effects corresponding to touch operations performed on different areas of the display 194. Different application scenarios (for example, a time reminder, information receiving, an alarm clock, and a game) may also correspond to different vibration feedback effects. Customization of a touch vibration feedback effect may also be supported.

The indicator 192 may be an indicator light, and may be configured to indicate a charging status and a power change, or may be configured to indicate a message, a missed call, a notification, and the like.

The SIM card interface 195 is configured to connect to a SIM card. The SIM card may be inserted into the SIM card interface 195 or removed from the SIM card interface 195, so that the SIM card is in contact with or separated from the electronic device 100. The electronic device 100 may support one or N SIM card interfaces, where N is a positive integer greater than 1. The SIM card interface 195 may support a nano-SIM card, a micro-SIM card, a SIM card, and the like. A plurality of cards may be simultaneously inserted into a same SIM card interface 195. The plurality of cards may be of a same type or different types. The SIM card interface 195 may be compatible with different types of SIM cards. The SIM card interface 195 may also be compatible with an external storage card. The electronic device 100 interacts with a network by using the SIM card, to implement functions such as conversation and data communication.

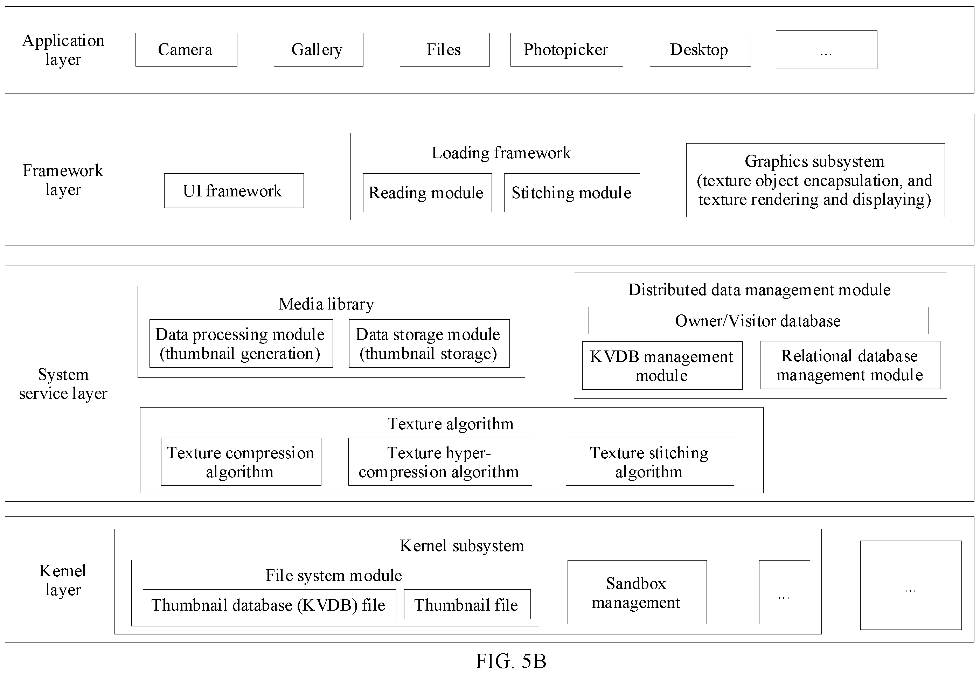

FIG. 5B is a block diagram of a software structure of an electronic device 100 according to an embodiment of this application.

In a layered architecture, software is divided into several layers, and each layer has a clear role and task. The layers communicate with each other through a software interface. In some embodiments, the system is divided into an application layer, a framework layer, a system service layer, and a kernel layer from top to bottom.

The application layer may include a series of application packages. In some examples, the application layer may also be referred to as an application layer.

As shown in FIG. 5B, the application packages may include application programs (which may also be referred to as applications) such as a camera, a gallery, file management, a desktop, and a picture picker (photopicker).

The camera may obtain images through shooting. The desktop may be used to display icons of applications installed on the electronic device 100. Applications such as the gallery, file management, and picture picker may all be used to display thumbnails. An example in which thumbnails are loaded and displayed by the gallery application is used for description below. In this embodiment of this application, the gallery application may also be referred to as the gallery for short.

Optionally, in some examples, the gallery may be used to display a thumbnail display interface. The thumbnail display interface is used to display thumbnails of a plurality of photos obtained by the electronic device 100.

The gallery may be further used to determine, according to a UI interface display rule provided by a UI framework, a preview specification (for example, a quantity of thumbnails that can be displayed and a performance parameter that can support querying of thumbnails in batches) of the thumbnail display interface, and a quantity of view controls required for the layout of the thumbnail display interface. Then the gallery application may calculate, based on to-be-displayed thumbnails, thumbnails that need to be displayed by each view control in the thumbnail display interface, and obtain a metadata information set of the thumbnails. The gallery application may further assemble metadata information based on a display order of the thumbnails in the thumbnail display interface, to obtain primary key (key) information. A display module may further request to load and display thumbnails in batches based on key information and layout distribution information of a plurality of thumbnails.

The framework layer provides an application programming interface (application programming interface, API) and a programming framework for applications at the application layer. The framework layer may include some predefined functions.

Optionally, in a possible implementation, the API and the programming framework that are provided by the framework layer may support a plurality of languages, for example, programming languages such as C, C++, Java, and JS.

As shown in FIG. 5B, the framework layer may further include a UI framework. The UI framework may be an application on the electronic device, for example, the gallery, and provides a UI component, an interface layout computing capability, a UI interaction capability, and the like.

As shown in FIG. 5B, the framework layer may include a loading framework. The loading framework may include a reading module and a stitching module. The reading module may be configured to read picture data in batches based on the metadata information of the thumbnails that can be displayed by each view control and the layout distribution information.

The stitching module may be configured to stitch, based on the layout distribution information of the thumbnail display interface, the plurality of thumbnails read by the reading module into one large picture.

The stitching module may be further configured to decode read super-compressed texture data of the thumbnails into texture data.

As shown in FIG. 5B, the framework layer may further include a graphics subsystem. The graphics subsystem may have a texture object encapsulation capability. For example, the graphics subsystem may encapsulate the texture data into a bitmap, and store the bitmap in shared memory.

The graphics subsystem may further have texture rendering and displaying capabilities. For example, the graphics subsystem may render the large picture obtained through stitching by the stitching module, and display the rendered large picture in the thumbnail display interface of the gallery.

The system service layer is a set of core capabilities of an operating system of the electronic device 100. The system service layer may provide services for the application layer through the framework layer.

As shown in FIG. 5B, the system service layer may include a media library. The media library may be configured to provide, for the application layer, services for accessing and obtaining media resources (for example, pictures, videos, audio, or files) on the electronic device. The media library may further include a data processing module and a data storage module. The data processing module may process a video or a picture shot by the electronic device, to obtain a thumbnail corresponding to the video or the picture. The data storage module may be configured to send a storage command, where the storage command may be used to instruct a distributed data management module to store the thumbnail.

As shown in FIG. 5B, the system service layer may further include a texture algorithm, and the texture algorithm may include a texture compression algorithm, a texture hyper-compression algorithm, and a texture stitching algorithm.

The data processing module in the media library may invoke the texture compression algorithm to compress the thumbnails into texture data, and then invoke the texture hyper-compression algorithm to compress the texture data into hyper-compressed texture data (or referred to as texture hyper-compressed data, hyper-compressed data, or the like).

After obtaining the hyper-compressed texture data corresponding to the thumbnails, the stitching module may invoke the texture hyper-compression algorithm to decode the hyper-compressed texture data into texture data, and then invoke the texture stitching algorithm to stitch texture data of a plurality of thumbnails into a large texture picture.

As shown in FIG. 5B, the system service layer may further include the distributed data management module. The distributed data management module may include an owner/visitor (owner/visitor) database module, a key-value database (key-value database, KVDB) management module, and a relational database management module.

The owner/visitor database module may be configured to manage access permission of the database. An owner of the database may directly read data from the database, and may write data into the database. A visitor of the database may directly read data from the database without inter-process access.

The KVDB management module may be configured to store a thumbnail based on a storage instruction of the media library. Specifically, the KVDB management module may sequentially store texture data corresponding to thumbnails in a year-view scene or a month-view scene that are generated by the media library into a thumbnail database file, where a thumbnail database may be implemented as a KVDB. The KVDB management module may store texture data corresponding to thumbnails in a day-view scene that are generated by the media library into a thumbnail file.

The kernel layer may include one or more kernel subsystems. The kernel subsystem may provide basic kernel capabilities for an upper layer, including kernel capabilities such as process/thread management, memory management, and a file system.

As shown in FIG. 5B, the kernel layer may include a file system module, and the file system module may be configured to store media resources in the electronic device 100. The file system module may include a plurality of files. The plurality of files may include a thumbnail database file used to store thumbnails in the year-view scene and the month-view scene, a metadata database file used to store metadata, and a thumbnail file used to store thumbnails in the day-view scene.

As shown in FIG. 5B, the kernel layer may further include a sandbox management module, and the sandbox management module may be configured to provide sandbox isolation for an application.

In the following, the thumbnail database file is referred to as a thumbnail database for short.

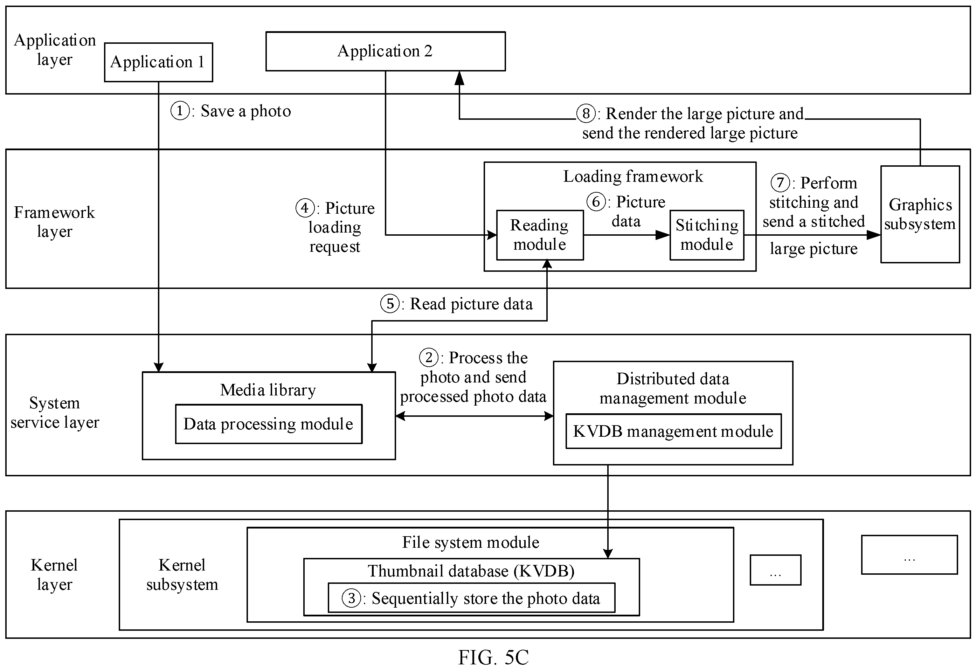

With reference to the block diagram of the software structure of the electronic device 100 provided in FIG. 5B, FIG. 5C shows interaction between related modules and a specific data flow direction when the electronic device saves a thumbnail and loads and displays the thumbnail according to an embodiment of this application. In FIG. 5C, an application 1 may obtain a picture and request to save the picture and a thumbnail corresponding to the picture. An application 2 may request to load and display the thumbnail. The application 1 may be any application that can obtain a picture and save the picture in the electronic device 100, for example, the camera. The application 2 may be any application that can display a thumbnail in the electronic device 100, for example, the gallery, file management, or picture picker. An example in which the application 1 is the camera and the application 2 is the gallery is used for description below. It may be understood that the application 1 and the application 2 are not specifically limited in this embodiment of this application.

As shown in FIG. 5C, that the electronic device 100 saves a thumbnail and displays the thumbnail in the gallery may include the following steps:

Steps ① to ③: Save a thumbnail.

①: The electronic device 100 receives an operation on the camera application, and in response, the electronic device 100 shoots a photo and transmits the photo obtained through shooting to the media library.

A user may tap a photographing control on a photographing interface of the camera application, and in response to the user operation, the camera of the electronic device 100 may shoot a photo. The electronic device 100 may transmit, to the media library, the photo obtained through shooting by the camera.

In some feasible examples, the electronic device 100 may first transmit, to the camera application, the photo obtained through shooting by the camera, process the shot photo by using a related algorithm of the camera application, and then transmit, to the media library, the photo processed by the camera application. This is not limited in this embodiment of this application.

②: The data processing module in the media library processes the shot photo and sends processed photo data to the file system module.

The media library may generate, based on a photo A1 obtained through shooting, a thumbnail A2 corresponding to the photo A1, and then process the thumbnail A2 by using the data processing module, to obtain texture data A3. Then the media library may send a storage instruction to instruct the distributed data management module to transmit the texture data A3 to the thumbnail database in the file system module.

For example, the media library may compress the photo A1 obtained through shooting to obtain the thumbnail A2 corresponding to the photo. A manner of generating the thumbnail A2 corresponding to the photo A1 is not limited in this embodiment of this application.

Optionally, in a possible implementation, when the electronic device 100 displays a browser application or a communication application, the electronic device 100 may download a picture B1 in response to an operation of saving, by the user, the picture B1 displayed in an application interface of the browser application, the communication application, or the like. Then the electronic device 100 may transmit the downloaded picture B1 to the media library. The media library may generate a thumbnail B2 corresponding to the picture B1, and process the thumbnail to obtain texture data B3. Then the media library may transmit the texture data B3 to the thumbnail database in the file system module.

③: The distributed data management module sequentially stores the photo data to the file system module.

The distributed data management module may store, in the file system module based on the storage instruction sent by the media library, the texture data obtained by processing the thumbnail.

In a possible implementation, the distributed data management module may store the texture data in the thumbnail database in the file system module. In some examples, the thumbnail database may be implemented as a key-value database (key-value database, KVDB). The KVDB may store or index data based on a key-value pair of the data.

Further, in a possible implementation, the distributed data management module may further sequentially store, in the KVDB based on a preview order of thumbnails in a thumbnail display interface, texture data corresponding to the thumbnails. In this way, the KVDB can provide a capability of querying texture data of thumbnails based on a range.

In a possible implementation, the media library may further instruct the distributed data management module to send the photo obtained through shooting to the file system module. The file system module may store the photo obtained through shooting.

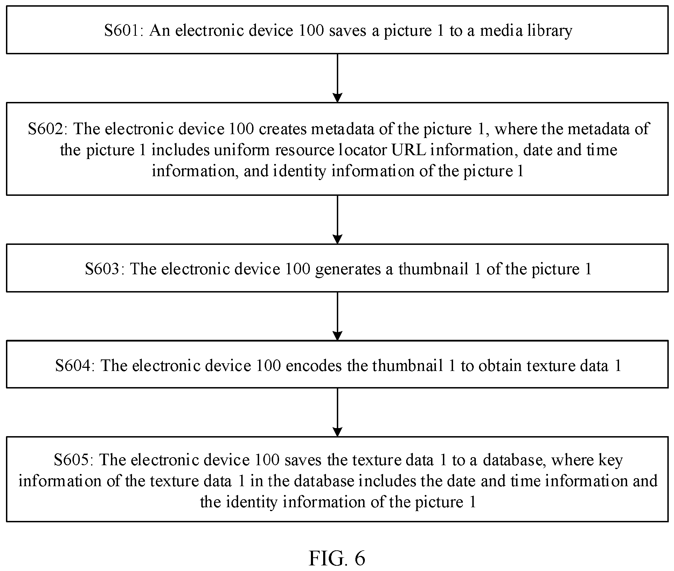

For storage of a texture picture obtained by processing thumbnails, refer to the following description of FIG. 6. Details are not described herein again.

Steps ④ to ⑧: Display the thumbnail.

④: The gallery delivers a picture loading request to the loading framework.

When the user starts the gallery, or the user scrolls through the thumbnail display interface of the gallery, the gallery may deliver a picture loading request to the loading framework at the framework layer.

⑤: The reading module in the loading framework reads picture data.

The reading module in the loading framework may obtain the picture data from the media library based on the picture loading request delivered by the application. Then the media library may read the picture data from the database of the file system module based on the picture loading request.

In a possible implementation, the picture data read by the reading module is the texture data corresponding to the thumbnail. The texture data does not need to be decoded and can be directly displayed.

Further, the reading module may read picture data in batches, that is, texture data corresponding to a plurality of thumbnails may be obtained at a time.

⑥: The reading module transmits the read picture data to the stitching module.

The reading module may transmit the read picture data, that is, the texture data, to the stitching module.

⑦: The stitching module stitches the read picture data and sends a stitched large picture to the graphics subsystem.

The stitching module may stitch the read picture data to obtain stitched picture data. In some examples, the stitched picture data is referred to as large picture data or a large picture.

The stitching module may transmit the stitched picture data to the graphics subsystem.

⑧: The graphics subsystem renders the large picture and sends the rendered large picture to the gallery.

The graphics subsystem may render the stitched picture data to obtain the rendered large picture. After the gallery receives the rendered large picture, the display module in the gallery may send the rendered large picture.

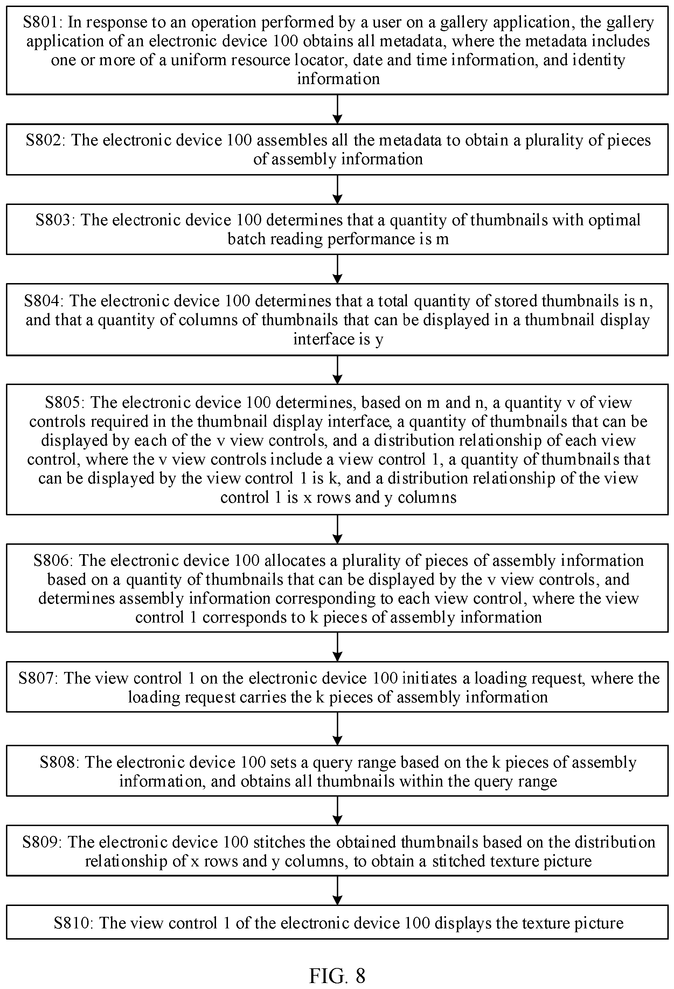

For details about how the electronic device 100 loads and displays a thumbnail, refer to the following description of FIG. 8. Details are not described herein again.

The following describes in detail a specific process in which an electronic device 100 stores a thumbnail in an embodiment of this application.

FIG. 6 is an example of a schematic flowchart for saving a thumbnail by an electronic device 100 according to an embodiment of this application. As shown in FIG. 6, that the electronic device 100 saves a thumbnail may include the following steps:

S601: The electronic device 100 saves a picture 1 to a media library.

The picture 1 may be obtained through shooting by a camera of the electronic device 100, or may be obtained through downloading by the electronic device 100 based on a save operation of a user. This is not limited in this embodiment of this application.

In some examples, the picture 1 may also be referred to as an original picture.

The electronic device 100 may save the picture 1 to the media library based on a photographing operation of the user or a tap-to-save operation of the user.

In some examples, a format of the picture 1 obtained by the electronic device 100 may be RGBX. Then the electronic device 100 may encode the picture 1 into binary data in a joint photographic experts group (joint photographic experts group, JPEG) format, and store the binary data in the JPEG format in the media library. The binary data in the JPEG format may be source data, or referred to as source data of the picture 1.

S602: The electronic device 100 creates metadata of the picture 1, where the metadata of the picture 1 includes uniform resource locator URL information, date and time information, and identity information of the picture 1.

When saving the picture 1 to the media library, the electronic device 100 may create the metadata of the picture 1. The metadata of the picture 1 may include but is not limited to one or more of a uniform resource locator (uniform resource locator, URL), the date and time information, and the identity information of the picture 1.

In this embodiment of this application, when saving a picture, the electronic device 100 may create metadata corresponding to the picture. Then the electronic device 100 may store the created metadata in a metadata database. The metadata of the picture is used to describe attribute information of the picture, for example, used to indicate a storage location, a file name, a picture size, occupied space, a creation time, and an identity of the picture. The electronic device 100 may find, based on the metadata of the picture, the corresponding picture and a thumbnail corresponding to the picture.

The electronic device 100 may have one metadata database and one thumbnail database. The metadata database may be configured to store metadata, and the thumbnail database is configured to store texture data corresponding to a thumbnail. In some examples, the thumbnail database may be implemented as a key-value database KVDB. An example in which the thumbnail database is a key-value database KVDB is used for description below.

The metadata may include one or more of a uniform resource locator, date and time information, and identity information. The uniform resource locator may indicate a storage location of a picture corresponding to the metadata. The date and time information may be used by the electronic device 100 to obtain a time (which may also be referred to as a creation time) of the picture. The identity information is a unique identifier of the picture. When other attribute information (for example, storage location, creation time, file name, picture size, occupied space, and creation time) of two pictures is the same, the two pictures may be distinguished by using the identity information.

In some examples, the URL may also be referred to as a link. The electronic device 100 may find a storage location of the source data of the picture 1 based on the URL in the metadata of the picture 1, and obtain the source data of the picture 1 based on the URL.

The date and time (datetime) information of the picture 1 may include a date and a time when the electronic device 100 shoots or downloads the picture 1. For example, the date on which the electronic device 100 shoots the picture 1 is February 20, 2023, and the time is 08:30:45. The date and time information of the picture 1 created by the electronic device 100 may be "20230220_083045". In other words, a format of the date and time information created by the electronic device 100 may be "year-month-day_hour-minute-second". It may be understood that the format of the date and time information is not limited in this embodiment of this application.

The metadata of the picture 1 may further include the identity information of the picture. For example, the identity information of the picture 1 may be a primary key ID corresponding to the picture 1. Optionally, the primary key ID of the picture 1 may include digits. For example, the primary key ID of the picture 1 may be 1. It may be understood that primary key IDs of all pictures saved in the electronic device 100 are different.

In a possible implementation, the electronic device 100 generates, in a sequentially increasing manner, primary key IDs for pictures saved by the electronic device 100. In other words, a later date and time of a picture saved by the electronic device 100 indicates a larger value of a primary key ID corresponding to the picture. For example, the date on which the electronic device 100 shoots the picture 1 is February 20, 2023, and the time is 08:30:45. The primary key ID corresponding to the picture 1 may be 10. A primary key ID of a next picture 2 saved by the electronic device 100 after the picture 1 may be the primary key ID of the picture 1 plus a first value. Assuming that the first value is 1, the primary key ID of the picture 2 may be 11.

The primary key ID of the picture 1 is not specifically limited in this embodiment of this application. A specific value of the first value is not limited in this embodiment of this application either.

S603: The electronic device 100 generates a thumbnail 1 of the picture 1.

The electronic device 100 may generate the thumbnail 1 of the picture 1. For example, the electronic device 100 may perform downsampling on the picture 1 to obtain the thumbnail 1. A size of the thumbnail 1 is less than that of the picture 1.

In a possible implementation, with reference to FIG. 5B, the media library of the electronic device 100 may include a data processing module. The electronic device 100 may further perform downsampling on the picture 1 by using the data processing module, to obtain the thumbnail 1 of the picture 1.

When the picture 1 is obtained through shooting by the electronic device 100, the electronic device 100 may simultaneously generate the thumbnail corresponding to the picture 1 when shooting the picture. When the picture 1 is obtained through downloading by the electronic device 100, after the electronic device 100 downloads the picture, the thumbnail 1 of the picture 1 is generated only after the user starts a gallery.

It may be understood that the metadata database may include metadata corresponding to an original picture (for example, the picture 1), and may further include metadata corresponding to a thumbnail (for example, the thumbnail 1).

S604: The electronic device 100 encodes the thumbnail 1 to obtain texture data 1.

The electronic device 100 may encode the thumbnail 1 to obtain the texture data 1. The texture data 1 may support direct display, that is, before the electronic device 100 obtains the texture data 1 for display, decoding is not required.

In a possible implementation, the electronic device 100 may encode the thumbnail by using adaptive scalable texture compression (adaptive scalable texture compression, ASTC), to obtain binary data in an ASTC format. The binary data in the ASTC format may also be referred to as texture data.

In a possible implementation, with reference to FIG. 5B, the media library of the electronic device 100 may include a data processing module. The electronic device 100 may further encode the thumbnail 1 by using the data processing module and the ASTC, to obtain binary data (which may be referred to as the texture data 1) in the ASTC format corresponding to the thumbnail 1.

Compared with the binary data in the JPEG format, the binary data in the ASTC format can be directly displayed without decoding. However, for the binary data in the JPEG format, before display, the electronic device 100 needs to perform decoding first. In this way, when the electronic device 100 stores the thumbnail by using the binary data in the ASTC format, when displaying the thumbnail, the electronic device 100 obtains the binary data in the ASTC format corresponding to the thumbnail, and directly displays the thumbnail without decoding, so that a display frame rate of the electronic device 100 can be increased.

S605: The electronic device 100 saves the texture data 1 to a database, where key information of the texture data 1 in the database includes the date and time information and the identity information of the picture 1.

The electronic device 100 saves, based on a display order of a plurality of thumbnails, texture data corresponding to the plurality of thumbnails to the database. The plurality of thumbnails include the thumbnail 1, and the texture data corresponding to the plurality of thumbnails includes the texture data 1. The electronic device 100 saves, based on a display order of the thumbnail 1, the texture data 1 corresponding to the thumbnail 1 to the database, where key information of the texture data 1 in the database includes the date and time information and the identity information of the picture 1.

In some possible implementations, the electronic device 100 determines the display order of the thumbnails based on date and time information of the plurality of thumbnails. The electronic device 100 may display a thumbnail with an earlier date and time before a thumbnail with a later date and time.

Further, in a possible implementation, that the electronic device 100 may display the thumbnail with the earlier date and time before the thumbnail with the later date and time may include: The electronic device 100 may display the thumbnail with the earlier date and time in a row previous to the thumbnail with the later date and time. Alternatively, for example, the electronic device 100 may display the thumbnail with the earlier date and time in a same row as the thumbnail with the later date and time, but the thumbnail with the earlier date and time is located before the thumbnail with the later date and time. For example, the electronic device 100 sequentially arranges thumbnails from left to right. In this case, the thumbnail with the earlier date and time is displayed in the same row as the thumbnail with the later date and time, but the thumbnail with the earlier date and time is located before the thumbnail with the later date and time. In other words, the thumbnail with the earlier date and time is displayed in the same row as the thumbnail with the later date and time, and the thumbnail with the earlier date and time is located on the left side of the thumbnail with the later date and time.

For example, a date and time of an original picture (that is, the picture 1) corresponding to the thumbnail 1 is "2023-02-20 08:30:45", and a date and time of an original picture corresponding to a thumbnail 2 is "2023-02-20 09:30:45". In other words, the time when the electronic device 100 obtains the original picture of the thumbnail 2 is later than the time when the electronic device 100 obtains the original picture of the thumbnail 1. In this case, the electronic device 100 displays the thumbnail 2 in a same row as the thumbnail 1, and the thumbnail 2 is located on the left side of the thumbnail 1; or the electronic device 100 displays the thumbnail 1 in a row next to the thumbnail 2. The electronic device 100 does not obtain other pictures in a period from the date and time of obtaining the original picture of the thumbnail 1 to the date and time of obtaining the original picture of the thumbnail 2. In this case, if the thumbnail 2 and the thumbnail 1 are displayed in the same row, the thumbnail 2 is on the left side of the thumbnail 1 and is adjacent to the thumbnail 1; or if the thumbnail 2 and the thumbnail 1 are not in the same row, the thumbnail 2 may be displayed on the rightmost side of a previous row, and the thumbnail 1 may be displayed on the leftmost side of a next row.

Optionally, in another possible implementation, the electronic device 100 determines the display order of the thumbnails based on a date-time order of the plurality of thumbnails and a primary key ID order corresponding to the plurality of thumbnails. When the electronic device 100 determines the display order of the thumbnails based on the date and time information and primary key IDs, the electronic device 100 may store the texture data corresponding to the thumbnails in descending order of the dates and times and primary key IDs.

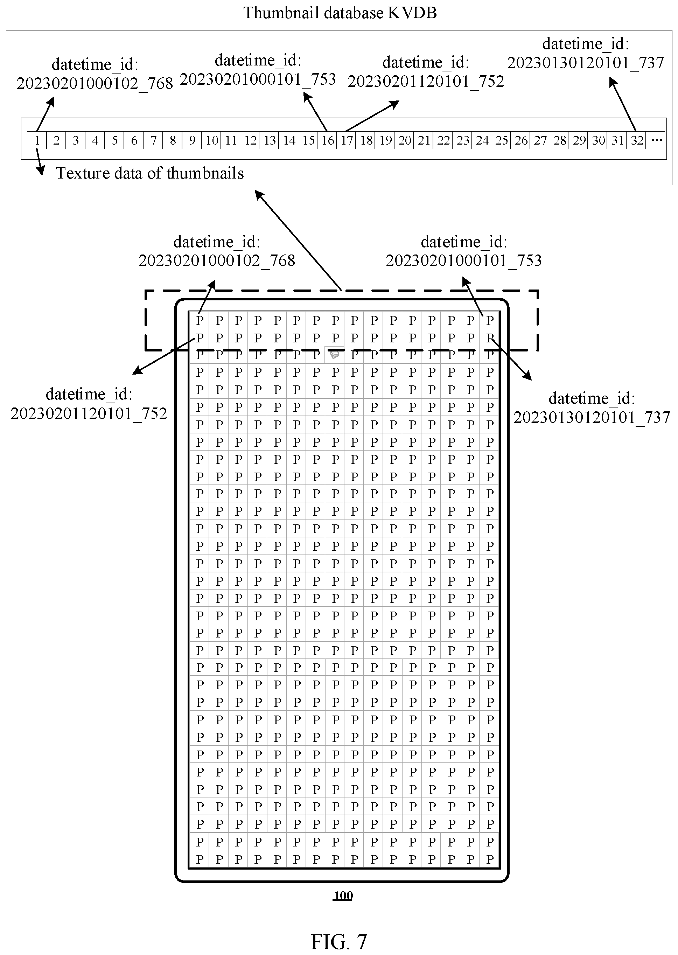

For example, as shown in FIG. 7, the electronic device 100 displays thumbnails based on dates and times (datetime) and primary key IDs, where the dates and times are arranged in descending order, and the primary key IDs are arranged in descending order. A character string formed by assembling a date and time and a primary key ID of a first thumbnail among thumbnails in a first row in the thumbnail display interface displayed by the electronic device 100 is "20230201000102_768". The character string "20230201000102_768" indicates that the date and time corresponding to the first thumbnail is "2023-02-01 00:01:02" and that the primary key ID corresponding to the first thumbnail is "768". A character string formed by assembling a date and time and a primary key ID of a last thumbnail among the thumbnails in the first row in the thumbnail display interface displayed by the electronic device 100 is "20230201000101_753". The character string "20230201000101_753" indicates that the date and time corresponding to the last thumbnail is "2023-02-01 00:01:01" and that the primary key ID corresponding to the last thumbnail is "753". A character string formed by assembling a date and time and a primary key ID of a first thumbnail among thumbnails in a second row in the thumbnail display interface displayed by the electronic device 100 is "20230201120101_752". The character string "20230201120101_752" indicates that the date and time corresponding to the first thumbnail is "2023-02-01 12:01:01" and that the primary key ID corresponding to the first thumbnail is "752". A character string formed by assembling a date and time and a primary key ID of a last thumbnail among the thumbnails in the second row in the thumbnail display interface displayed by the electronic device 100 is "20230130120101_737". The character string "20230130120101_737" indicates that the date and time corresponding to the last thumbnail is "2023-01-30 12:01:01" and that the primary key ID corresponding to the last thumbnail is "737".

In other words, 16 thumbnails in the first row are arranged in descending order of dates and times, and the primary key IDs are arranged in descending order from "768" to "753". In this case, when the electronic device 100 generates the thumbnails in the first row and stores the thumbnails in the database, the 16 thumbnails in the first row are also sequentially stored in the thumbnail database in display order. 16 thumbnails in the second row are arranged in descending order of dates and times, and the primary key IDs are arranged in descending order from "752" to "737". The 16 thumbnails in the second row are also sequentially stored in the thumbnail database in display order. In the thumbnail database, locations of the first thumbnail in the second row and the last one of the 16 thumbnails in the first row are adjacent.

For example, the database may be a KVDB. In other words, an order of the plurality of thumbnails stored by the electronic device 100 in the database is consistent with the display order of the plurality of thumbnails in the thumbnail display interface, with a one-to-one correspondence.

It may be understood that the dates and times and primary keys of the first thumbnails among the thumbnails in the first row and the second row shown in FIG. 7 are merely examples. Similarly, the dates and times and primary keys of the last thumbnails among the thumbnails in the first row and the second row shown in FIG. 7 are merely examples. In FIG. 7, the display order of the thumbnails in the thumbnail display interface is reflected by the dates and times and primary keys of the first thumbnails, and the dates and times and primary keys of the last thumbnails among the thumbnails in the first row and the second row.

In a possible implementation, key information corresponding to a thumbnail in the database may be a datetime_id character string formed by combining a date and time and a primary key ID corresponding to the thumbnail. When storing the thumbnails, the electronic device 100 sequentially stores the thumbnails based on datetime_id character strings corresponding to the thumbnails. In this way, the database KVDB that stores the thumbnails in the electronic device 100 provides a capability of querying thumbnails in batches based on a range. For example, the gallery application may initiate a request for reading a thumbnail, where the request carries a maximum value max and a minimum value min of key information. The KVDB may return all thumbnails whose key information is within a min-max range. It may be understood that, if the KVDB stores texture data of thumbnails, the KVDB may return texture data corresponding to all thumbnails whose key information is within the min-max range. If the KVDB stores decoded thumbnails, the KVDB may return all decoded thumbnails whose key information is within the min-max range.

In this embodiment of this application, the KVDB may store texture data of thumbnails, or may store decoded thumbnails. This is not limited in this embodiment of this application.

In a possible implementation, the electronic device 100 may sequentially store the plurality of thumbnails in the KVDB in display order by using a data storage service in distributed data management.

Based on the thumbnail storage mode described above, the following describes in detail a specific process of reading thumbnails and displaying the thumbnails when the electronic device displays the thumbnails.

FIG. 8 is an example of a schematic flowchart of a picture display method according to an embodiment of this application. As shown in FIG. 8, the picture display method provided in this embodiment of this application may include the following steps.

S801: In response to an operation performed by a user on a gallery application, the gallery application of an electronic device 100 obtains all metadata, where the metadata includes one or more of a uniform resource locator, date and time information, and identity information.

The operation performed by the user on the gallery application may include an operation of starting the gallery application or a view scene switching operation performed by the user in the gallery application. The view scene switching operation may include any one of operations such as switching from a day-view scene to a month-view scene or a year-view scene, switching from the month-view scene to the day-view scene or the year-view scene, and switching from the year-view scene to the day-view scene or the month-view scene. For example, the user may tap a month-view control 103b or a year-view control 103c in a thumbnail display interface 101 shown in FIG. 1. For another example, the user may tap a day-view control 103a or a year-view control 103c in a thumbnail display interface 200 shown in FIG. 2. For another example, the user may tap a day-view control 103a or a month-view control 103b in a thumbnail display interface 300 shown in FIG. 3.

It may be understood that the operation performed by the user on the gallery application is not specifically limited in this application.

The electronic device 100 may receive the operation performed by the user on the gallery application, and in response to the operation, the gallery application of the electronic device 100 may obtain all metadata stored in a metadata database of the electronic device 100. Each picture obtained by the electronic device 100 has corresponding metadata. The metadata of the picture is used to describe attribute information of the picture, for example, used to indicate a storage location, a file name, a picture size, occupied space, a creation time, and an identity of the picture. The electronic device 100 may find, based on the metadata of the picture, the corresponding picture and a thumbnail corresponding to the picture.

The electronic device 100 may have one metadata database and one thumbnail database. The metadata database may be configured to store metadata, and the thumbnail database is configured to store texture data corresponding to a thumbnail. In some examples, the thumbnail database may be implemented as a key-value database KVDB.

The metadata may include one or more of a uniform resource locator, date and time information, and identity information. The uniform resource locator may indicate a storage location of a picture corresponding to the metadata. The date and time information may be used by the electronic device 100 to obtain a time (which may also be referred to as a creation time) of the picture. The identity information is a unique identifier of the picture. When other attribute information (for example, storage location, creation time, file name, picture size, occupied space, and creation time) of two pictures is the same, the two pictures may be distinguished by using the identity information.

S802: The electronic device 100 assembles all the metadata to obtain a plurality of pieces of assembly information.

The electronic device 100 may assemble all the metadata, for example, combine date and time information and identity information in the metadata into character strings. Then the electronic device 100 may obtain assembly information of each piece of metadata.

In some possible implementations, because key information in the KVDB storing thumbnails is a character string including date and time information and a primary key ID corresponding to each thumbnail, when the electronic device 100 queries the KVDB and reads a corresponding thumbnail, the electronic device 100 needs to use the key information to query the KVDB for a stored thumbnail corresponding to the key information. Therefore, the electronic device 100 needs to assemble the metadata based on a format of the key information to obtain assembly information. For example, the electronic device 100 may assemble a date and time and a primary key ID in metadata corresponding to each thumbnail into a character string in a form of datetime_id. In this way, the electronic device 100 may obtain assembly information corresponding to all the thumbnails, and assembly information of each thumbnail is a character string in the form of datetime_id obtained by assembling the date and time and primary key ID in the data corresponding to the thumbnail. For example, a date and time in metadata corresponding to a thumbnail 1 is "2023-02-20 08:30:45", and a primary key ID thereof is 01. Assembly information corresponding to the thumbnail 1 may be "20230220083045_01".

It may be understood that a format of the assembly information is consistent with the format of the key information. When the key information of the KVDB is in another format, the electronic device 100 may assemble the metadata to obtain assembly information consistent with the format of the key information. A specific format of the key information is not limited in this embodiment of this application.

In a possible implementation, when the user starts the gallery, the electronic device 100 has performed step S801 and step S802, that is, has obtained all the metadata and has assembled the metadata. Then, when the user switches between view scenes in the gallery application, the electronic device 100 may not need to obtain the metadata or assemble the metadata again. The user can directly use the assembly information obtained when starting the gallery. In other words, the electronic device 100 does not need to perform step S801 and step S802 again.

S803: The electronic device 100 determines that a quantity of thumbnails with optimal batch reading performance is m.

The electronic device 100 may store a quantity m of thumbnails with optimal batch reading performance supported by the KVDB.

In a possible implementation, the quantity of thumbnails with optimal batch reading performance supported by the KVDB is determined by performance of a storage chip (which may also be referred to as a memory) in the electronic device 100 and/or performance of an I/O interface. Better performance of the storage chip indicates better performance of the I/O interface, and more thumbnails with optimal performance when the electronic device 100 reads the thumbnails in batches from the KVDB, that is, a larger value of m.

It may be understood that, for electronic devices with different storage chip performance and/or different I/O interface performance, a maximum quantity of thumbnails that can be read in batches by the KVDB may also vary. In other words, for different electronic devices, values of m may be different. A specific value of m is not limited in this embodiment of this application.

It may be understood that the electronic device 100 achieves optimal performance when reading m thumbnails in batches at a time. However, this does not mean that the electronic device 100 can read only m thumbnails at a time. A quantity of thumbnails that are read by the electronic device 100 in batches at a time may be greater than m, or may be less than m.

S804: The electronic device 100 determines that a total quantity of stored thumbnails is n, and that a quantity of columns of thumbnails that can be displayed in a thumbnail display interface is y.

The electronic device 100 may determine that the total quantity of thumbnails stored in the KVDB is n. It may be understood that, regardless of a thumbnail display interface displayed by the electronic device 100 in any view scene, the user may view, by performing upward scroll and downward scroll operations, all thumbnails stored on the electronic device 100.

It may be understood that a total quantity of thumbnails stored on electronic devices of different users may vary. A total quantity of thumbnails stored by an electronic device of a same user may also vary at different times. The total quantity of thumbnails stored on the electronic device 100, that is, a value of n, is not limited in this embodiment of this application.

In a system of the electronic device 100, the quantity y of columns of thumbnails that can be displayed in thumbnail display interfaces in different view scenes may be configured. The electronic device 100 may determine, from the system configuration, the quantity y of columns of thumbnails that can be displayed in a thumbnail display interface. A specific value of the quantity y of columns is not limited in this embodiment of this application.

Although all the thumbnails stored on the electronic device 100 may be displayed in a thumbnail display interface in each view scene through the upward scroll and downward scroll operations of the user, for thumbnail display interfaces in different scenes, a quantity of thumbnails that can be displayed in a current display area may vary, and a quantity of columns of thumbnails that can be displayed also varies. A size of the current display area is equal to a size of a display.

For example, a quantity of thumbnails that can be displayed in a current display area of the thumbnail display interface in the day-view scene is less than a quantity of thumbnails that can be displayed in a current display area of the thumbnail display interface in the month-view scene. For example, a quantity of columns of thumbnails that can be displayed in a current display area of the thumbnail display interface in the day-view scene is less than a quantity of columns of thumbnails that can be displayed in a current display area of the thumbnail display interface in the month-view scene. For example, a quantity of thumbnails that can be displayed in a current display area of the thumbnail display interface in the month-view scene is less than a quantity of thumbnails that can be displayed in a current display area of the thumbnail display interface in the year-view scene. For example, a quantity of columns of thumbnails that can be displayed in a current display area of the thumbnail display interface in the month-view scene is less than a quantity of columns of thumbnails that can be displayed in a current display area of the thumbnail display interface in the year-view scene. FIG. 1 shows the thumbnail display interface 101 in the day-view scene. A quantity of thumbnails displayed in a current display area of the thumbnail display interface 101 is 32, and the 32 thumbnails may be arranged based on a distribution relationship of eight rows and four columns. FIG. 2 shows the thumbnail display interface 200 in the month-view scene. A quantity of thumbnails that can be displayed in a current display area of the thumbnail display interface 200 is 108, and the 108 thumbnails may be arranged based on a distribution relationship of 16 rows and 8 columns. FIG. 3 shows the thumbnail display interface 300 in the year-view scene. A quantity of thumbnails that can be displayed in a current display area of the thumbnail display interface 300 is 512, and the 512 thumbnails may be arranged based on a distribution relationship of 32 rows and 16 columns.

The quantity of thumbnails and the quantity of columns of thumbnails that can be displayed in the current display area also vary in thumbnail display interfaces of different types of electronic devices 100. A larger display of the electronic device 100 may indicate a larger quantity of thumbnails and a larger quantity of columns of thumbnails that can be displayed in the current display area of the thumbnail display interface of the electronic device 100. For example, when a size of a display of a tablet is greater than a size of a display of a mobile phone, a quantity of thumbnails and a quantity of columns of thumbnails that can be displayed in a current display area of a thumbnail display interface in each view scene of the tablet are greater than a quantity of thumbnails and a quantity of columns of thumbnails that can be displayed in a current display area of a thumbnail display interface in a corresponding view scene of the mobile phone. In other words, in a year-view scene, a quantity of thumbnails that can be displayed in the current display area of the thumbnail display interface of the tablet is greater than a quantity of thumbnails that can be displayed in the current display area of the thumbnail display interface of the mobile phone, and a quantity of columns of thumbnails that can be displayed in the current display area of the thumbnail display interface of the tablet is greater than a quantity of columns of thumbnails that can be displayed in the current display area of the thumbnail display interface of the mobile phone.

In a possible implementation, when the user starts the gallery, the electronic device 100 has performed step S803, that is, has determined that the quantity of thumbnails with optimal batch reading performance is m. Then, when the user switches between the view scenes in the gallery application, the electronic device 100 may not need to redetermine that the quantity of thumbnails with optimal batch reading performance is m, and may directly use a determining result obtained when the gallery is started. In other words, the electronic device 100 does not need to perform step S803 again.

S805: The electronic device 100 determines, based on m and n, a quantity v of view controls required in the thumbnail display interface, a quantity of thumbnails that can be displayed by each of the v view controls, and a distribution relationship of each view control, where the v view controls include a view control 1, a quantity of thumbnails that can be displayed by the view control 1 is k, and a distribution relationship of the view control 1 is x rows and y columns.

The electronic device 100 may determine, based on the total quantity n of thumbnails stored on the electronic device 100 and the quantity m of thumbnails with optimal batch reading performance, that the quantity of view controls required in the thumbnail display interface is v. The electronic device 100 further needs to determine the quantity of thumbnails that can be displayed by each of the v view controls and the distribution relationship of each view control. The v view controls may include the view control 1, the quantity of thumbnails that can be displayed by the view control 1 is k, and a distribution relationship of the k thumbnails is x rows and y columns.

In a possible implementation, if m is greater than n, the electronic device 100 can read all the thumbnails by performing batch reading once. In this case, the electronic device 100 needs to create only one view control, and initiate, by using the view control, a request for reading the thumbnails. In other words, a value of v is 1. For example, if n = 500 and m = 800, the electronic device 100 needs to create only one view control, initiate a request for reading the thumbnails, and read 500 thumbnails in batches at a time. Herein, reading the thumbnails is reading texture data corresponding to the thumbnails stored in the KVDB.

In this way, only one view control is required in the thumbnail display interface displayed by the electronic device 100. When the user scrolls upward or downward on the thumbnail display interface, the view control has prepared the thumbnails that need to be displayed. In this way, when the user scrolls upward or downward on the thumbnail display interface, the electronic device 100 can display the thumbnails more quickly in the thumbnail display interface, thereby improving user experience.

Further, in a possible implementation, the electronic device 100 may determine, based on the quantity of columns of thumbnails that can be displayed by the view control and n, a quantity x of rows that need to be displayed by the view control. The quantity of columns of thumbnails that can be displayed by the view control is equal to the quantity y of columns of thumbnails that can be displayed in the thumbnail display interface. In different view scenes, the quantity y of columns of thumbnails that can be displayed in the thumbnail display interface is fixed, and a value of y may be configured by the system. However, the quantity of rows that need to be displayed by the view control varies with the quantity of thumbnails that need to be displayed.

In some feasible examples, x is equal to a value obtained by rounding up (n/y), where / indicates a division operator. For example, if n = 100 and y = 16, 100/16 = 6.25. In this case, 7 may be obtained by rounding up 6.25, that is, x = 7.

Optionally, in another possible implementation, m is less than n, and one view control may read m thumbnails in batches at a time. In this case, the electronic device 100 needs to obtain the n thumbnails by using a plurality of view controls. The quantity v of view controls is equal to a value obtained by rounding up (n/m). For example, if n = 512 and m = 200, n/m = 512/200 = 2.56, and 2.56 may be rounded up to 3. In other words, the quantity v of view controls is equal to 3. In other words, the electronic device 100 needs to create three view controls to obtain 512 thumbnails.

Further, in a possible implementation, the electronic device 100 first determines a quantity x of rows that need to be displayed by the view control 1 in the v view controls. x is equal to a value obtained by rounding up (m/y). In this case, a maximum quantity of thumbnails that can be displayed by the view control 1 is x * y, where x * y is greater than or equal to m. A quantity of rows that need to be displayed by another view control in the v view controls is determined based on n, a maximum quantity x * y (that is, k) of thumbnails that can be displayed by the view control 1, and a quantity of columns of thumbnails that can be displayed by the view control.

For example, v is equal to 3, n = 512, m = 200, and y = 16. In this case, the quantity x of rows that need to be displayed by the view control 1 is equal to 13 obtained by rounding up (200/16 = 12.5). In this case, the quantity of thumbnails that can be displayed by the view control 1 is 13 * 16 = 208. A quantity p of rows that need to be displayed by a view control 2 is equal to 13 obtained by rounding up (200/16 = 12.5). In this case, a quantity of thumbnails that can be displayed by the view control 2 is 13 * 16 = 208. In this way, both the view control 1 and the view control 2 can display 208 thumbnails, and a view control 3 needs to display only remaining 96 (512 - 208 - 208 = 96) thumbnails. A quantity q of rows that need to be displayed by the view control 3 is equal to 6 (96/16 = 6).

It may be understood that the quantity of thumbnails that can be displayed by the view control 1 is k, and a quantity of thumbnails that need to be read by the view control 1 in batches is k. When k is equal to m, the view control 1 achieves optimal performance in reading the thumbnails in batches. When k is less than m or greater than m, but a difference between k and m is not large, although the view control 1 does not achieve optimal performance in reading the thumbnails in batches, there is also great impact on performance.

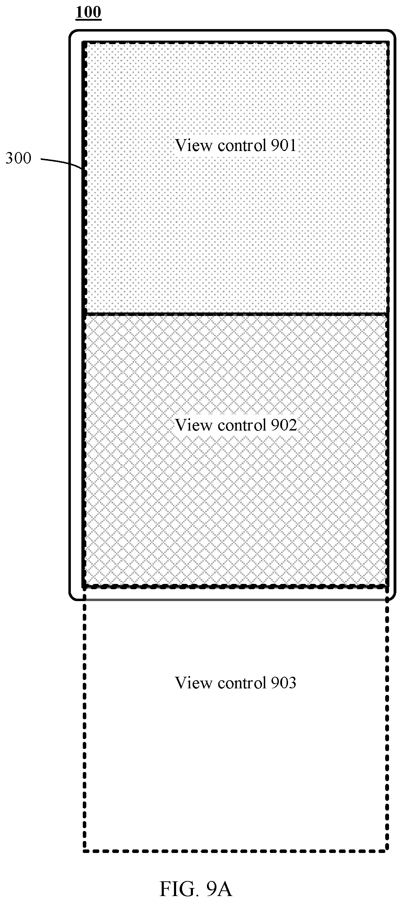

For example, if the quantity n of the thumbnails stored on the electronic device 100 is 768, and m is 256, the electronic device 100 may determine that the quantity of required view controls is 3 (768/256 = 3). As shown in FIG. 9A, the electronic device 100 may determine that a quantity of view controls required by the thumbnail display interface 300 is 3, that is, a view control 901, a view control 902, and a view control 903. The view control 901 and the view control 902 may be in the current display area of the thumbnail display interface 300, and the view control 903 is not in the current display area of the thumbnail display interface 300. The electronic device 100 needs to determine quantities of thumbnails that can be displayed by the view control 901, the view control 902, and the view control 903, and then further needs to determine distribution relationships of the view control 901, the view control 902, and the view control 903 separately. For example, a distribution relationship of the view control 901 is x rows and y columns. In other words, the view control 901 may display thumbnails in x rows and y columns.

With reference to FIG. 5B, in a possible implementation, the electronic device 100 may create v view controls by using a display module in the gallery application.

S806: The electronic device 100 allocates a plurality of pieces of assembly information based on a quantity of thumbnails that can be displayed by the v view controls, and determines assembly information corresponding to each view control, where the view control 1 corresponds to k pieces of assembly information.

The electronic device 100 may allocate assembly information of thumbnails on the electronic device 100, to determine thumbnails that can be displayed by each view control. For example, the electronic device 100 may divide the assembly information of the thumbnails into v groups. For example, each view control can display x * y = k thumbnails. In this case, the electronic device 100 may allocate a total of k pieces of assembly information of x * y thumbnails with latest dates and times to the view control 1. The electronic device 100 may sequentially allocate the v groups of assembly information to the v view controls in display order.

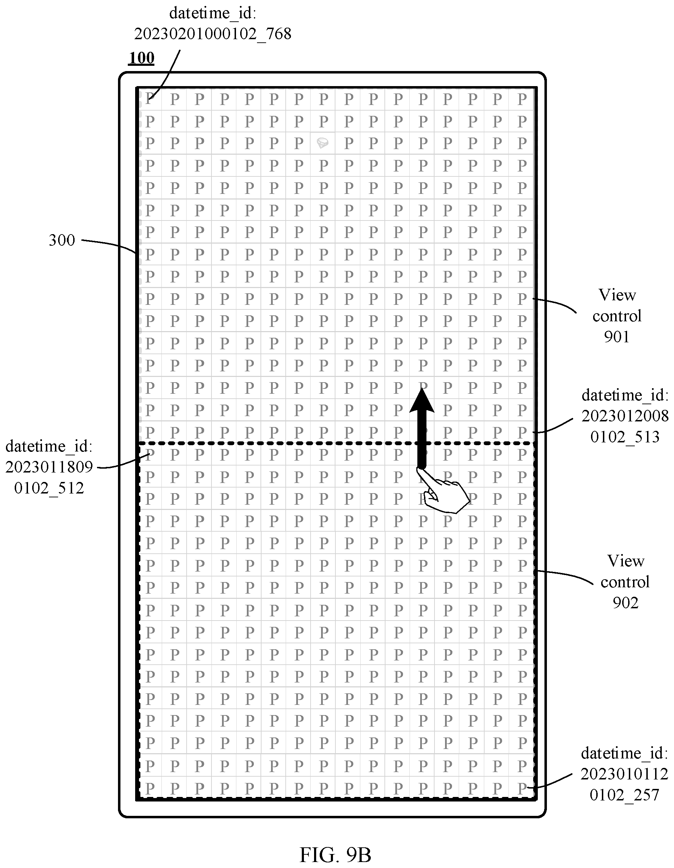

For example, as shown in FIG. 9B, the electronic device 100 may allocate a total of 256 pieces of assembly information from assembly information 20230201000102_768 to assembly information 20230120080102_513 to the view control 901. In this case, the view control 901 may display 256 thumbnails corresponding to the assembly information 20230201000102_768 to the assembly information 20230120080102_513.

As shown in FIG. 9B, the electronic device 100 may allocate a total of 256 pieces of assembly information from assembly information 20230118090102_512 to assembly information 20230101120102_257 to the view control 902. In this case, the view control 902 may display 256 thumbnails corresponding to the assembly information 20230118090102_512 to the assembly information 20230101120102_257.

As shown in FIG. 9B, the view control 901 and the view control 902 may be displayed in the current display area of the thumbnail display interface 300. The user may scroll upward to view thumbnails displayed in the view control 903. In response to the upward scroll operation of the user in the current display area of the thumbnail display interface 300, the electronic device 100 may display the view control 903 in the current display area of the thumbnail display interface 300.

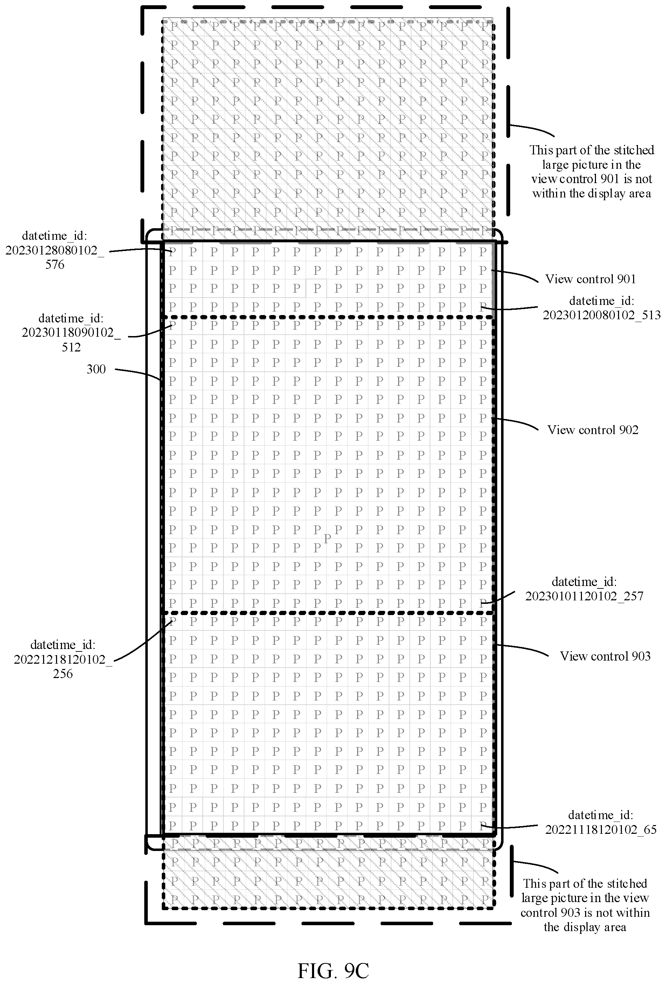

As shown in FIG. 9C, the electronic device 100 may respond to the upward scroll operation of the user, and the electronic device 100 may display, in the current display area of the thumbnail display interface 300, a part of a stitched large picture carried by the view control 901, an entire stitched large picture carried by the view control 902, and a part of a stitched large picture carried by the view control 903.

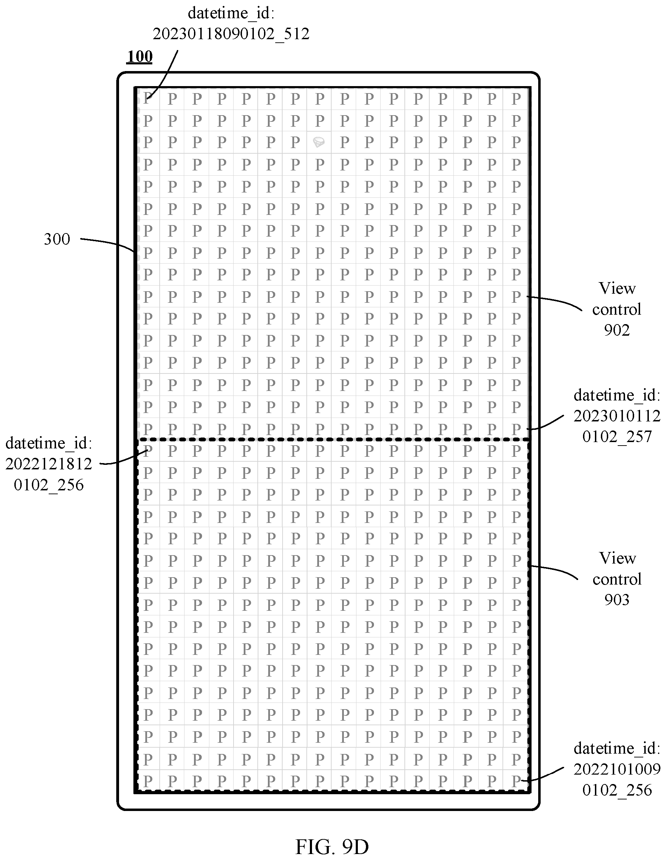

When the user continues to scroll upward, as shown in FIG. 9D, in response to the scroll operation, the electronic device 100 may display the view control 902 and the view control 903 in the current display area of the thumbnail display interface 300. The electronic device 100 may allocate a total of 256 pieces of assembly information from assembly information 20221218120102_256 to assembly information 20221010090102_001 to the view control 903. In this case, the view control 903 may display 256 thumbnails corresponding to the assembly information 20221218120102_256 to the assembly information 20221010090102_001.

S807: The view control 1 on the electronic device 100 initiates a loading request, where the loading request carries the k pieces of assembly information.

The view control 1 on the electronic device 100 initiates the loading request, where the loading request may carry the k pieces of assembly information.

With reference to FIG. 5C, in a possible implementation, the display module in the electronic device 100 may deliver, to a reading module in a loading framework, the loading request initiated by the view control 1.

S808: The electronic device 100 sets a query range based on the k pieces of assembly information, and obtains all thumbnails within the query range.

The electronic device 100 may find a maximum datetime_id character string and a minimum datetime _id character string in assembly information of the k thumbnails. The maximum datetime_id character string indicates assembly information corresponding to a thumbnail with a latest date and time and a largest primary key ID in the assembly information of the k thumbnails. The minimum datetime_id character string indicates assembly information corresponding to a thumbnail with an earliest date and time and a smallest primary key ID in the assembly information of the k thumbnails.

For ease of description, the maximum datetime_id character string may be recorded as datetime_id (max), and the minimum datetime _id character string may be recorded as datetime_id (min).

Then the electronic device 100 may set the query range to datetime_id (min) to datetime_id (max). The electronic device 100 may obtain, based on the query range, texture data corresponding to all thumbnails whose key information falls within the query range in the thumbnail database.

For example, in the assembly information corresponding to the k thumbnails, the maximum datetime_id character string is "20240220100000_208", and the minimum datetime_id character string is "20230220100000_000". In this case, the query range set by the electronic device 100 is "20230220100000_000" to " 20240220100000_208". The electronic device 100 may obtain, based on the query range, texture data corresponding to all thumbnails whose key information falls within the query range.

With reference to FIG. 5C, in a possible implementation, the electronic device 100 may set query information by using the reading module in the loading framework, and the reading module may obtain, from the thumbnail database, the texture data corresponding to all the thumbnails within the query range. Specifically, the reading module may set a query command of the KVDB, where the query command may carry datetime_id (min) and datetime_id (max). After receiving the query command, the KVDB needs to perform only two queries, that is, a query for a location of datetime_id (max) and then a query for a location of datetime_id (min). Finally, the KVDB may return an entire block of stored buffer data within the query range to the reading module. The entire block of stored buffer data includes the texture data corresponding to all the thumbnails within the query range.

Further, in a possible implementation, after obtaining the entire block of stored buffer data, the reading module traverses buffer content, and determines whether key information of each thumbnail in a buffer falls within the query range from datetime_id (min) to datetime_id (max). If the key information of each thumbnail is within the query range from datetime_id (min) to datetime_id (max), texture data corresponding to the thumbnail saved in the buffer is retained. If the key information of each thumbnail is not within the query range from datetime_id (min) to datetime_id (max), texture data corresponding to the thumbnail saved in the buffer is deleted. Sequentially, the reading module may traverse key information corresponding to the entire block of buffer data, that is, key information, returned by the KVDB, of the texture data corresponding to all the thumbnails within the query range. In this way, data corresponding to a thumbnail that is selected and deleted by the user can be prevented from being included in the entire block of buffer data returned by the KVDB. In other words, when the user selects to delete the thumbnail in the thumbnail display interface, the electronic device 100 performs only logical deletion on the thumbnail, but does not perform physical deletion. In other words, the electronic device 100 has deleted metadata corresponding to the thumbnail, but texture data corresponding to the thumbnail stored in the KVDB is not deleted in time.

S809: The electronic device 100 stitches the obtained thumbnails based on the distribution relationship of x rows and y columns, to obtain a stitched texture picture.

The electronic device 100 may stitch the obtained k thumbnails based on a grouping result, to obtain the stitched texture picture. In other words, the electronic device 100 stitches the k thumbnails based on the distribution relationship of the k thumbnails in the x rows and the y columns.

Specifically, in a possible implementation, the electronic device 100 may obtain a data size (singlesize) and a file header size (headsize) of a first thumbnail among the k thumbnails, and request shared memory whose size is (x * y * singlesize + headsize) (* represents a multiplication sign). The electronic device 100 sequentially fills, based on the grouping result of the k thumbnails, the texture data corresponding to the k thumbnails into the shared memory, and finally may obtain a buffer containing the k thumbnails that are stitched together.

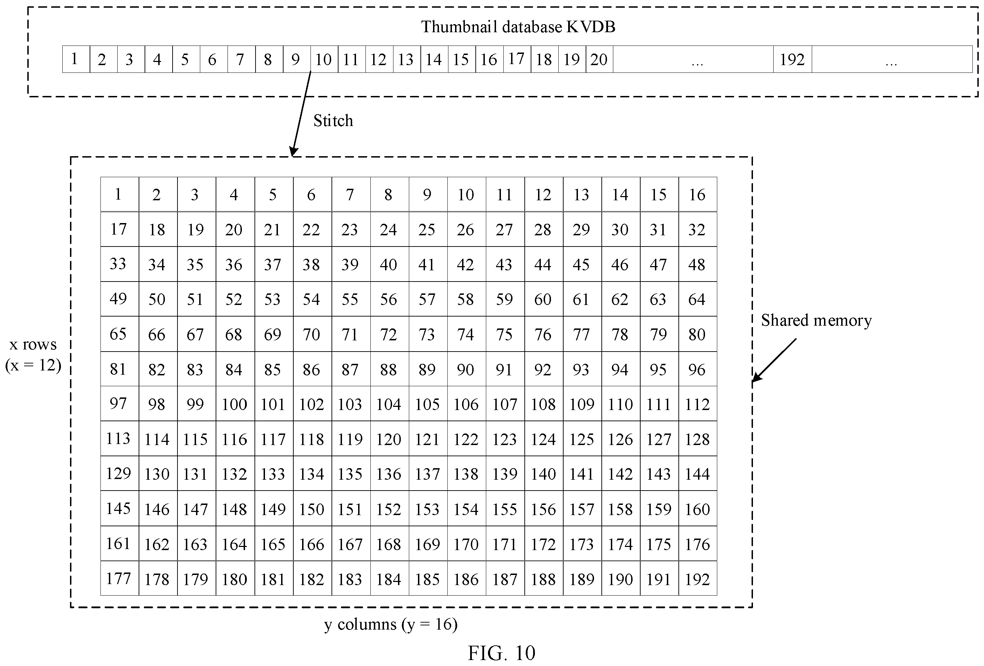

For example, FIG. 10 shows an example in which k is 192, that is, x = 12, and y = 16. The electronic device 100 may obtain, from the KVDB, texture data corresponding to 192 thumbnails, and then request shared memory whose size is (12 * 16 * singlesize + headsize). The electronic device 100 may sequentially fill the 192 thumbnails into memory blocks of the shared memory based on a grouping result, and finally obtain a buffer containing a stitched texture picture.

With reference to FIG. 5B, in a possible implementation, the reading module in the electronic device 100 transmits the obtained k thumbnails to a stitching module, and the stitching module stitches the k thumbnails based on the grouping result, to obtain a stitched texture picture.

S810: The view control 1 of the electronic device 100 displays the texture picture.

The view control 1 of the electronic device 100 may directly display the stitched texture picture without decoding. In this way, the electronic device 100 can display the k thumbnails in the view control 1 more quickly.

In a possible implementation, the view control 1 of the electronic device 100 may instruct a graphics subsystem to render the stitched texture picture. After the graphics subsystem completes rendering, the view control 1 may display a rendered large texture picture.

The electronic device 100 may determine, based on a first operation, view controls that can be displayed in the current display area of the thumbnail display interface. For example, the electronic device 100 may determine, based on the first operation, that the view control 1 can be displayed in the current display area of the thumbnail display interface. In this case, the view control 1 may determine a query range based on the k pieces of assembly information that correspond to the k thumbnails and that are allocated by the electronic device 100 to the view control 1, and obtain thumbnails within the query range. In other words, the view control 1 may obtain the thumbnails according to the foregoing step S807 to step S810, and display a stitched thumbnail.

It may be understood that when the electronic device 100 creates a plurality of view controls, the plurality of view controls may obtain thumbnails and display the thumbnails according to the foregoing process of obtaining and displaying the k thumbnails by the view control 1 in step S807 to step S810. Specific steps of obtaining thumbnails and displaying the thumbnails by other view controls in the plurality of view controls are not described in this application.

It may be understood that, using the year-view scene as an example, when the electronic device 100 switches from another view scene to the year-view scene, the electronic device 100 may display a thumbnail display interface in the year-view scene according to step S801 to step S810. When the electronic device 100 determines that the thumbnail display interface in the year-view scene includes v view controls, the electronic device 100 has allocated a quantity of thumbnails to be displayed by each view control and specific thumbnails to be displayed. The electronic device 100 displays only one or more view controls in the current interface of the thumbnail display interface according to the foregoing steps. When the user scrolls upward or downward on the thumbnail display interface, the electronic device 100 may determine, based on the scroll operation of the user, a view control to be displayed in the current interface, then obtain, in batches, a plurality of thumbnails to be displayed in the view control, and stitch the plurality of thumbnails. Then the electronic device 100 may display a stitched thumbnail. After the stitched thumbnail is displayed, the user may view the displayed thumbnail in the current interface of the thumbnail display interface. In other words, during refreshing, each view control in the current interface may obtain thumbnails and display the thumbnails according to the process of obtaining and displaying the k thumbnails in the view control 1 in step S807 to step S810. Because the electronic device 100 has determined the thumbnails to be displayed by each view control, when the electronic device 100 refreshes and displays the thumbnails based on the scroll operation of the user, the view control may correspondingly obtain the thumbnails in batches. In this way, the electronic device 100 can display the refreshed thumbnails more quickly, and display performance of the electronic device 100 can be improved. In this way, user experience can be improved.

In addition, because the stitched texture picture is stored in the shared memory, and the shared memory may support inter-process transmission, a rendering process may obtain the shared memory having the stitched texture picture across processes, without inter-process copying, thereby reducing memory copies on the electronic device 100 and improving display performance of the electronic device 100.

According to the picture display method provided in this embodiment of this application, when storing thumbnails corresponding to a shot or saved picture, the electronic device 100 stores the thumbnails based on an arrangement order of the thumbnails in the thumbnail display interface. In this way, the electronic device 100 has a capability of querying and obtaining the thumbnails in batches. Then, when the electronic device displays the thumbnail display interface, the electronic device 100 may query and obtain the thumbnails in batches. The electronic device 100 may stitch a plurality of obtained thumbnails to obtain a stitched thumbnail, and then the electronic device 100 may display the stitched thumbnail by using a view control. Thumbnails displayed in the thumbnail display interface are stitched into one or more large pictures. One view control can carry one large picture. In this way, the electronic device 100 can display a large quantity of thumbnails by using only a few view controls (for example, one or two view controls). In addition, the electronic device 100 may query and obtain thumbnails in batches, so that the number of IO interface calls can be reduced. In this way, performance and a frame rate of the electronic device in loading and displaying a large quantity of thumbnails can be improved, thereby avoiding or reducing occurrence of problems of blank blocks and frame freezing when the user browses a large quantity of thumbnails.

It may be understood that the picture display method provided in this embodiment of this application is described by using an example in which thumbnails are displayed in the gallery. In this application, an application that can display thumbnails is not limited. For example, a file management application can also display thumbnails. For a process of displaying thumbnails by another application that can display thumbnails, refer to the foregoing process of displaying thumbnails by the gallery application. Details are not described again in this embodiment of this application.

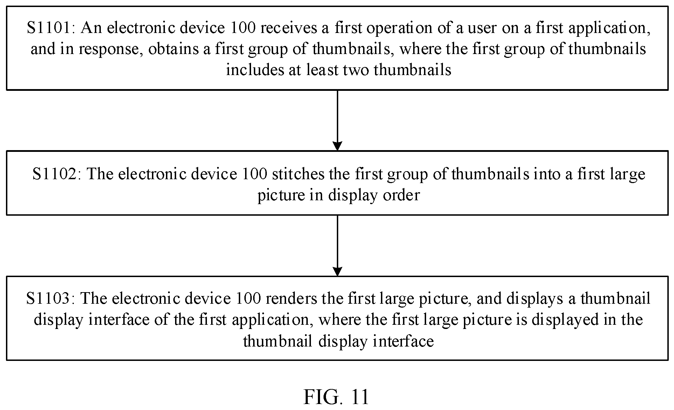

FIG. 11 is an example of a schematic flowchart of a picture display method according to an embodiment of this application. As shown in FIG. 11, the picture display method provided in this embodiment of this application may include the following steps.

S1101: An electronic device 100 receives a first operation of a user on a first application, and in response, obtains a first group of thumbnails, where the first group of thumbnails includes at least two thumbnails.

The first operation may include any one of an operation of starting a gallery application by the user, an operation of switching between view scenes by the user on a thumbnail display interface, and a scroll operation of the user on the thumbnail display interface.

In a possible implementation, obtaining the first group of thumbnails may include: The electronic device 100 obtains the first group of thumbnails from a database, where a storage order of the first group of thumbnails in the database is consistent with a display order of the first group of thumbnails.

In a possible implementation, obtaining the first group of thumbnails may include: The electronic device 100 obtains metadata of the first group of thumbnails; the electronic device 100 obtains a first query range based on dates and times and IDs in the metadata of the first group of thumbnails; and the electronic device 100 obtains the first group of thumbnails within the first query range from the database based on the first query range at a time.

In a possible implementation, that the electronic device 100 obtains the query range based on the dates and times and IDs in the metadata of the first group of thumbnails may include: The electronic device 100 assembles the dates and times and IDs of the first group of thumbnails, to obtain a plurality of character strings, where a quantity of the plurality of character strings is equal to a quantity of thumbnails in the first group; and the electronic device 100 determines a maximum value and a minimum value in the plurality of character strings, and sets the first query range based on the maximum value and the minimum value.

In a possible implementation, that the electronic device obtains the first group of thumbnails may include: The electronic device 100 allocates a first view control to carry the first group of thumbnails; and the electronic device 100 sends a thumbnail loading request to the database by using the first view control, where the thumbnail loading request is used to obtain the first group of thumbnails from the database. In this way, the electronic device 100 may request, by using the view control, to load the thumbnails that need to be carried by the view control.

In a possible implementation, before the electronic device 100 receives the first operation of the user on the gallery application, and in response, obtains the first group of thumbnails, the method may further include: The electronic device 100 obtains a first picture; the electronic device 100 performs downsampling on the first picture, to obtain thumbnails of the first picture; the electronic device 100 saves dates and times and IDs corresponding to the thumbnails of the first picture; and the electronic device 100 saves the thumbnails of the first picture to the database in order of the dates and times and IDs corresponding to the thumbnails of the first picture.

With reference to the first aspect, in a possible implementation, that the electronic device 100 saves the thumbnails of the first picture to the database in order of the dates and times and IDs corresponding to the thumbnails of the first picture may include: The electronic device 100 performs texture compression on the thumbnails of the first picture to obtain texture data; and the electronic device 100 saves the texture data to the database in order of the dates and times and IDs corresponding to the thumbnails of the first picture.

The first group of thumbnails may be k thumbnails in FIG. 8.

For details about how the electronic device 100 specifically obtains the first group of thumbnails, refer to the descriptions in step S801 to step S808. Details are not described herein again.

S1102: The electronic device 100 stitches the first group of thumbnails into a first large picture in display order.

In a possible implementation, that the electronic device 100 stitches the first group of thumbnails into the large picture in display order may include: The electronic device 100 requests first memory; and the database of the electronic device 100 sequentially fills the first group of thumbnails into the first memory in display order, and stitches the first group of thumbnails in the first memory to obtain the large picture.

The first memory is shared memory.

For details about how the electronic device 100 obtains the large picture through stitching, refer to the description in step S809. For the large picture obtained through stitching, refer to FIG. 10. Details are not described herein again.

S1103: The electronic device 100 renders the first large picture, and displays a thumbnail display interface of the first application, where the first large picture is displayed in the thumbnail display interface.

In a possible implementation, that the electronic device 100 renders the first large picture may include: A rendering process of the electronic device 100 reads the first large picture from the first memory, and renders the first large picture.

In a possible implementation, before displaying the thumbnail display interface of the gallery application, the method may include: The electronic device 100 creates the first view control, and carries the first large picture by using the first view control.

In a possible implementation, the method may further include: The electronic device 100 obtains a second group of thumbnails in response to the first operation, where the second group of thumbnails includes at least two thumbnails; the electronic device 100 stitches the second group of thumbnails into a second large picture in display order; and the electronic device 100 renders the second large picture, and displays the second large picture in the thumbnail display interface.

In a possible implementation, after displaying the second large picture in the thumbnail display interface, the method may further include: The electronic device 100 receives a second operation, and in response, displays a part of content of the first large picture and all content of the second large picture in the thumbnail display interface, where the second operation is an upward scroll operation on the thumbnail display interface.

In a possible implementation, before displaying the second large picture in the thumbnail display interface, the method may further include: The electronic device 100 creates a second view control, and carries the second large picture by using the second view control.

In a possible implementation, after the electronic device 100 displays the thumbnail display interface of the gallery application, the method may further include: The electronic device 100 receives a third operation, and in response, obtains a third group of thumbnails, where the third group of thumbnails includes at least two thumbnails; the electronic device 100 stitches the third group of thumbnails into a third large picture in display order; the electronic device 100 creates a third view control, and carries the third large picture by using the third view control; and the electronic device 100 renders the third large picture, and displays the third large picture in the thumbnail display interface.

In a possible implementation, the third operation is a scroll operation, and obtaining the third group of thumbnails may include: The electronic device 100 determines dates and times and IDs of the third group of thumbnails based on the third operation; the electronic device 100 determines a second query range of the third group of thumbnails based on the dates and times and IDs of the third group of thumbnails; and the electronic device 100 obtains the third group of thumbnails within the second query range from the database based on the second query range at a time.

The first view control may be a view control 901 in FIG. 9A, the second view control may be a view control 902 in FIG. 9A, and the third view control may be a view control 903 in FIG. 9A.

For step S1103, refer to the description of step S810. Details are not described herein again.

According to the picture display method provided in this embodiment of this application, when storing thumbnails corresponding to a shot or saved picture, the electronic device 100 stores the thumbnails based on an arrangement order of the thumbnails in the thumbnail display interface. In this way, the electronic device 100 has a capability of querying and obtaining the thumbnails in batches. Then, when the electronic device displays the thumbnail display interface, the electronic device 100 may query and obtain the thumbnails in batches. The electronic device 100 may stitch a plurality of obtained thumbnails to obtain a stitched thumbnail, and then the electronic device 100 may display the stitched thumbnail by using a view control. Thumbnails displayed in the thumbnail display interface are stitched into one or more large pictures. One view control can carry one large picture. In this way, the electronic device 100 can display a large quantity of thumbnails by using only a few view controls (for example, one or two view controls). In addition, the electronic device 100 may query and obtain thumbnails in batches, so that the number of IO interface calls can be reduced. In this way, performance and a frame rate of the electronic device in loading and displaying a large quantity of thumbnails can be improved, thereby avoiding or reducing occurrence of problems of blank blocks and frame freezing when the user browses a large quantity of thumbnails.

An embodiment of this application further provides a computer-readable storage medium. The computer-readable storage medium stores computer program code. When the foregoing processor executes the computer program code, a communication apparatus is enabled to perform the method in any one of the foregoing embodiments.

An embodiment of this application further provides a computer program product. When the computer program product is run on a computer, the computer is enabled to perform the method in any one of the foregoing embodiments.

In conclusion, the foregoing embodiments are merely intended for describing the technical solutions of this application, but not for limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of embodiments of this application.

As used in the foregoing embodiments, the term "when" may be interpreted as "if", "after", "in response to determining", or "in response to detecting", depending on the context. Similarly, the phrase "when determining" or "if detecting [the described condition or event]" may be interpreted as "if determining", "in response to determining", "when detecting [the described condition or event]", or "in response to detecting [the described condition or event]", depending on the context.

All or some of the foregoing embodiments may be implemented by software, hardware, firmware, or any combination thereof. When software is used to implement the embodiments, all or some of the embodiments may be implemented in a form of a computer program product. The computer program product includes one or more computer instructions. When the computer program instructions are loaded and executed on a computer, the procedures or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid state disk), or the like.

Persons of ordinary skill in the art may understand that all or some of the procedures of the methods in embodiments may be implemented by a computer program instructing relevant hardware. The program may be stored in a computer-readable storage medium. When the program is run, the procedures of the methods in embodiments are performed. The storage medium includes any medium that can store program code, such as a ROM, a random access memory RAM, a magnetic disk, or an optical disc.

## Claims

1. A picture display method, comprising:
receiving, by an electronic device, a first operation of a user on a gallery application, and in response, obtaining a first group of thumbnails, wherein the first group of thumbnails comprises at least two thumbnails;
stitching, by the electronic device, the first group of thumbnails into a first large picture in display order; and
rendering, by the electronic device, the first large picture, and displaying a thumbnail display interface of the gallery application, wherein the first large picture is displayed in the thumbnail display interface.

2. The method according to claim 1, wherein before displaying the thumbnail display interface of the gallery application, the method further comprises:
creating, by the electronic device, a first view control, and carrying the first large picture by using the first view control.

3. The method according to claim 2, wherein the method further comprises:
obtaining, by the electronic device, a second group of thumbnails in response to the first operation, wherein the second group of thumbnails comprises at least two thumbnails;
stitching, by the electronic device, the second group of thumbnails into a second large picture in display order; and
rendering, by the electronic device, the second large picture, and displaying the second large picture in the thumbnail display interface.

4. The method according to claim 3, wherein after displaying the second large picture in the thumbnail display interface, the method further comprises:
receiving, by the electronic device, a second operation, and in response, displaying a part of content of the first large picture and all content of the second large picture in the thumbnail display interface, wherein the second operation is an upward scroll operation on the thumbnail display interface.

5. The method according to claim 4, wherein before displaying the second large picture in the thumbnail display interface, the method further comprises:
creating, by the electronic device, a second view control, and carrying the second large picture by using the second view control.

6. The method according to claim 5, wherein after displaying the thumbnail display interface of the gallery application, the method further comprises:
receiving, by the electronic device, a third operation, and in response, obtaining a third group of thumbnails, wherein the third group of thumbnails comprises at least two thumbnails;
stitching, by the electronic device, the third group of thumbnails into a third large picture in display order;
creating, by the electronic device, a third view control, and carrying the third large picture by using the third view control; and
rendering, by the electronic device, the third large picture, and displaying the third large picture in the thumbnail display interface.

7. The method according to any one of claims 1 to 6, wherein obtaining the first group of thumbnails comprises:
obtaining, by the electronic device, the first group of thumbnails from a database, wherein a storage order of the first group of thumbnails in the database is consistent with the display order of the first group of thumbnails.

8. The method according to claim 7, wherein stitching, by the electronic device, the first group of thumbnails into the large picture in display order comprises:
requesting, by the electronic device, first memory; and
sequentially filling, by the database of the electronic device, the first group of thumbnails into the first memory in display order, and stitching the first group of thumbnails in the first memory to obtain the large picture.

9. The method according to claim 8, wherein rendering, by the electronic device, the first large picture comprises:
reading, by a rendering process of the electronic device, the first large picture from the first memory, and rendering the first large picture.

10. The method according to claim 9, wherein the first operation comprises any one of an operation of starting the gallery application by the user, an operation of switching between view scenes by the user on the thumbnail display interface, and a scroll operation of the user on the thumbnail display interface.

11. The method according to claim 10, wherein the database stores metadata of the first group of thumbnails, and the metadata comprises dates and times and identities IDs corresponding to the first group of thumbnails.

12. The method according to claim 11, wherein the first group of thumbnails comprises a first thumbnail, a date and time corresponding to the first thumbnail is a first date and time, an ID corresponding to the first thumbnail is a first ID, the first date and time is a date and time when the electronic device saves the first thumbnail, and the first ID is a number that is generated when the electronic device saves the first thumbnail and that is used to identify the first thumbnail.

13. The method according to claim 12, wherein obtaining the first group of thumbnails comprises:
obtaining, by the electronic device, the metadata of the first group of thumbnails;
obtaining, by the electronic device, a first query range based on the dates and times and IDs in the metadata of the first group of thumbnails; and
obtaining, by the electronic device, the first group of thumbnails within the first query range from the database based on the first query range at a time.

14. The method according to claim 13, wherein obtaining, by the electronic device, the query range based on the dates and times and IDs in the metadata of the first group of thumbnails comprises:
assembling, by the electronic device, the dates and times and IDs of the first group of thumbnails, to obtain a plurality of character strings, wherein a quantity of the plurality of character strings is equal to a quantity of thumbnails in the first group; and
determining, by the electronic device, a maximum value and a minimum value in the plurality of character strings, and setting the first query range based on the maximum value and the minimum value.

15. The method according to claim 14, wherein the third operation is a scroll operation, and obtaining the third group of thumbnails comprises: determining, by the electronic device, dates and times and IDs of the third group of thumbnails based on the third operation;
determining, by the electronic device, a second query range of the third group of thumbnails based on the dates and times and IDs of the third group of thumbnails; and
obtaining, by the electronic device, the third group of thumbnails within the second query range from the database based on the second query range at a time.

16. The method according to claim 2, wherein obtaining, by the electronic device, the first group of thumbnails comprises:
allocating, by the electronic device, the first view control to carry the first group of thumbnails; and
sending, by the electronic device, a thumbnail loading request to the database by using the first view control, wherein the thumbnail loading request is used to obtain the first group of thumbnails from the database.

17. The method according to any one of claims 8 to 16, wherein a quantity of view controls required in the thumbnail display interface is determined based on a total quantity of thumbnails stored on the electronic device and a quantity of thumbnails read in batches.

18. The method according to claim 17, wherein before receiving, by the electronic device, the first operation of the user on the gallery application, and in response, obtaining the first group of thumbnails, the method further comprises:
obtaining, by the electronic device, a first picture;
performing, by the electronic device, downsampling on the first picture, to obtain thumbnails of the first picture;
saving, by the electronic device, dates and times and IDs corresponding to the thumbnails of the first picture; and
saving, by the electronic device, the thumbnails of the first picture to the database in order of the dates and times and IDs corresponding to the thumbnails of the first picture.

19. The method according to claim 18, wherein saving, by the electronic device, the thumbnails of the first picture to the database in order of the dates and times and IDs corresponding to the thumbnails of the first picture comprises:
performing, by the electronic device, texture compression on the thumbnails of the first picture to obtain texture data; and
saving, by the electronic device, the texture data to the database in order of the dates and times and IDs corresponding to the thumbnails of the first picture.

20. An electronic device, wherein the electronic device comprises one or more processors and a memory, the memory stores code, and when the code is executed by the processor, the electronic device is enabled to perform the method according to any one of claims 1 to 19.

21. A computer-readable storage medium, comprising computer instructions, wherein when the computer instructions are run on an electronic device, the electronic device is enabled to perform the method according to any one of claims 1 to 19.

22. A computer program product, wherein when the computer program product is run on a computer, the computer is enabled to perform the method according to any one of claims 1 to 19.
